(19)

**Europäisches Patentamt**
**European Patent Office**
**Office européen des brevets**

(11) **EP 4 404 540 A1**

(12) **EUROPEAN PATENT APPLICATION**
published in accordance with Art. 153(4) EPC

(43) Date of publication:
**24.07.2024 Bulletin 2024/30**

(21) Application number: **23844053.1**

(22) Date of filing: **31.05.2023**

(51) International Patent Classification (IPC):
*H04L 67/63* (2022.01)    *G06F 8/61* (2018.01)
*G06F 9/445* (2018.01)    *H04L 67/10* (2022.01)

(86) International application number:
**PCT/CN2023/097420**

(87) International publication number:
**WO 2024/108960 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.11.2022 CN 202211475176**

(71) Applicant: **Fuzhou University**
**350108 Fuzhou Fujian (CN)**

(72) Inventors:
• **CHEN, Xing**
  **Fuzhou, Fujian 350108 (CN)**
• **LI, Ming**
  **Fuzhou, Fujian 350108 (CN)**
• **ZHANG, Jianshan**
  **Fuzhou, Fujian 350108 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(54) **METHOD FOR SUPPORTING ADAPTIVE OFFLOADING OF MULTIPLE INTERNET OF THINGS APPLICATIONS IN EDGE ENVIRONMENT**

(57)    Disclosed is a method for supporting adaptive unloading of multi-Internet of Things (IoT) applications in an edge environment, including the following steps: constructing an application compliant with a universal program structure supporting on-demand computing unloading; for the application compliant with the universal program structure supporting on-demand computing unloading, extracting a program fragment flowchart through static code analysis to provide internal flow information of the application for generation of an unloading solution; analyzing a peripheral mobile edge computing (MEC) environment and the application through an unloading solution generating algorithm based on a multi-task particle swarm optimization-genetic algorithm to obtain the optimal unloading solution; and performing, by the application, computing unloading by taking a service as a particle size according to the unloading solution to minimize a system overhead under a circumstance that a deadline constraint of each application is satisfied. The method supports the computing unloading of different types of applications in the MEC environment, and minimizes the system overhead generated by the computing unloading.

FIG. 1

EP 4 404 540 A1

**Description**

**TECHNICAL FIELD**

The present invention belongs to the technical field of Internet of Things, and particularly relates to a method for supporting adaptive unloading of multi-Internet of Things (IoT) applications in an edge environment.

**BACKGROUND**

With rapid development of Internet of Things (IoT) and IoT equipment, a variety of resource-intensive IoT applications, for example, human face recognition, sound-semantic analysis, interactive games and augmented reality, are generated. Limited by processing capacity, memory capacity, and battery capacity, most resource-intensive IoT applications cannot operate directly on the IoT equipment.

Computing unloading is an effective method to solve resource constraints of the IoT equipment. Particularly, with proposal of mobile cloud computing (MCC), all or part of computing tasks are unloaded to a cloud server which provides huge storage and computing resources. More particularly, an application is divided at a certain particle size, and some of computing intensive tasks are unloaded to cloud for execution. Other simple tasks are processed locally, thereby shortening the response time of the application.

However, the distance between the IoT equipment and the cloud server is relatively far, which may cause a significant execution delay. In addition, massive data transmission may result in traffic congestion in a core network. To solve the above problems, mobile edge computing (MEC) is introduced. Mobile edge provides a computing capacity and storage resources superior to those of the IoT equipment and is closer to the IoT equipment, which may significantly shorten the delay.

The intensive tasks are unloaded to the cloud server or an edge server, which is indeed capable to alleviate the computing and storage pressures of the IoT equipment. However, variety of application types and complicated and variable operating environments of the MEC result in difficulty to compute unloading in MEC. Moreover, to overcome the expensive overhead brought by computing unloading is also a nonnegligible problem. Specifically speaking, there are two challenges below:

Challenge 1: an enabling mechanism. For various types of IoT applications, to design a universal method which is capable to decouple different types of strongly coupled single applications into different functional modules and support computing on-demand unloading becomes a challenge.

Challenge 2: unloading decision making. In the MEC, the computing resources are scattered in the IoT equipment, the edge server, and the cloud server, and the resources of different computing platforms have significant differences in performance. Different applications may scramble for resources in executive processes. In such a complicated and varied network environment, to obtain an appropriate unloading strategy to minimize the money overhead under a circumstance of satisfying a deadline of each application is another challenge.

Most previous studies focus on solving computing unloading of Android applications. More people transfer the target to unload a deep neural network (DNN) due to development of the DNN. However, the studies are only targeted to specific types of applications and are of no universality. Moreover, the studies are targeted to the computing unloading problem in the single application and cannot make full use of the computing resources scattered and varied in the MEC environment.

**SUMMARY**

An object of the present invention is to provide a method for supporting adaptive unloading of multi-Internet of Things (IoT) applications in an edge environment. The method supports the computing unloading of different types of applications in the MEC environment, and minimizes the system overhead generated by the computing unloading.

To achieve the above object, the present invention adopts the following technical solution: a method for supporting adaptive unloading of multi-Internet of Things (IoT) applications in an edge environment, including:

constructing an application compliant with a universal program structure supporting on-demand computing unloading;
for the application compliant with the universal program structure supporting on-demand computing unloading, extracting a program fragment flowchart through static code analysis to provide internal flow information of the application for generation of an unloading solution;
analyzing a peripheral mobile edge computing (MEC) environment and the application through an unloading solution generating algorithm based on a multi-task particle swarm optimization-genetic algorithm (MPSO-GA) to obtain the optimal unloading solution; and

performing, by the application, computing unloading by taking a service as a particle size according to the unloading solution to minimize a system overhead under a circumstance that a deadline constraint of each application is satisfied.

Further, the universal program structure supporting on-demand computing unloading is designed through a design mode supporting independent deployment and execution of modules of the different types of applications; the design mode satisfies the following conditions: each module of the application is capable to be independently deployed and executed at different computing nodes; the module is capable to determine a computing node where a module or a database to be invoked is located, so as to guarantee invoking validity; the invoked module is capable to receive an input of an invoking module and return a correct executive result;

there are two types of services in the application compliant with the design mode: a pure service, using local data without invoking other services; a compound service, relying on data from other services and required to invoke other services; the compound service mainly comprises the following attributes:

(1) key-value type data Params/result: all external variables required by an invoked service in an execution process are imported through Params, i.e., there is no sentence accessing to the external variables in the service; when the service needs to modify the external variables, the external variables are exported by virtue of result; and the external variables refer to variables accessed in the execution process of the service and defined outside the service;

(2) a character string seq: a character string seq is maintained in the application, and an invoke path from a current service to a primary service is recorded; and, to maintain the seq, when the service is invoked, the seq is imported in the form of parameter, and a name of the invoked service is added into the seq;

(3) an Invoke function: the compound service invokes other services through the Invoke function; the Invoke function achieves two functions: a) the Invoke function controls forwarding: whether the service is locally executed or remotely invoked is determined, and if the service is remotely invoked, which computing node invoking the service is determined; and b) data transmission: all parameters required by the invoked service are serialized, and the returned service executive result is deserialized; and

(4) a Call function: the service establishes a connection with the database through the Call function; the Call function determines an address of the database through a name of the database to be interacted and returns a connecting channel for data transmission with the database, so as to ensure normal data interaction between the service and the database.

Further, the unloading solution generating algorithm describes an application unloading program in the MEC environment from the aspects of a network model, an application model, and a performance model, and solves the application unloading problem through the multi-task particle swarm optimization-genetic algorithm (MPSO-GA);

a network environment comprises a cloud server CS, a plurality of edge servers ES, and a plurality of Internet of things devices DS; the MEC environment is modeled as a map $G = (N, E)$ including a set $N = \{n_1, n_2, ..., n_w\}$ of the computing nodes, and a set $E$ is used to represent a sub connection thereamong; the computing nodes are represented by $n_i = \langle \psi_i, \omega_i, c_i^{com} \rangle$, where $\psi_i$ represents computing power of the computing node $n_i$; it is assumed that a storage capacity of each node is capable to satisfy a corresponding demand; $\omega_i$ represents the maximum number of tasks capable of being executed by the node $n_i$, wherein the value thereof is equal to a nuclear number of the node; $c_i^{com}$ represents a computing cost by using the computing node $n_i$ per second; $e_{i,j}$ is used to represent a connection between $n_i$ and $n_j$, and is related to a bandwidth $v_{i,j}$ and the minimum link delay $rtt_{i,j}$, and $c_{i,j}^{tran}$ is used to represent a transmission overhead per second between the nodes $n_i$ and $n_j$;

it is assumed that there is a system going to be executed for a time $\theta$ in the unloading process; there are a plurality of applications $A = \{a_1, a_2, ..., a_g\}$ from IoT equipment in the system and the applications $a_i$ are executed at a time interval of $\mu_i$, so each application is executed for $\xi_i = \theta / \mu_i$ times within a time period $\theta$, and $dl_i$ is used to represent a deadline of the application $a_i$; wherein each application is compliant with a universal program structure; and the application is modeled as the program fragment flowchart $Flow_i = (D_i, S_i, P_i, Q_i)$;

to compute a response time and a money overhead of the application, an unloading solution corresponding to the service and database is constructed, where $SP_i = \{sp(s_i^1), sp(s_i^2), ..., sp(s_i^o)\}$ represents a deployment ad-

dress of the service in the application $a_i$; for each program fragment $s_i^{j,k}$, the executive address thereof is dependent on the deployment address of the service $s_i^j$, i.e., $sp(s_i^{j,k})=sp(s_i^j)$; and $DP_i = \{dp(b_i^1), dp(b_i^2), ..., dp(b_i^l)\}$ represents a deployment address of the database in the application $a_i$;

in the $\lambda_i^{th}$ executive process of the application $a_i$, $\overset{\lambda_i}{AT}(s_i^{j,k})$ is used to represent a time when a task executing the program fragment $s_i^{j,k}$ arrives at the computing node; a time when the fragment is actually executed is presented as $\overset{\lambda_i}{ST}(s_i^{j,k})$; $\overset{\lambda_i}{WT}(s_i^{j,k})$ represents a queuing time of the fragment on the node, wherein:

$$\overset{\lambda_i}{WT}(s_i^{j,k}) = \overset{\lambda_i}{ST}(s_i^{j,k}) - \overset{\lambda_i}{AT}(s_i^{j,k}) \tag{1}$$

a data importing time when the precursor fragment $s_i^{x,y}$ transfers the data to the program fragment $s_i^{j,k}$ is as follows:

$$IT(s_i^{j,k}) = \frac{\alpha_i^{j,k}}{v_{sp(s_i^{x,y}),sp(s_i^{j,k})}} + rtt_{sp(s_i^{x,y}),sp(s_i^{j,k})} \tag{2}$$

a time $OT(s_i^{j,k})$ when the program fragment $s_i^{j,k}$ occupies the node $sp(s_i^{j,k})$ comprises a self-task execution time $ET(s_i^{j,k})$ and a data transmission time $DT(s_i^{j,k}, d_i^h)$ between different databases during execution, where $OT(s_i^{j,k})$ is computed as follows:

$$OT(s_i^{j,k}) = ET(s_i^{j,k}) + \sum_{h=1}^{l} DT(s_i^{j,k}, d_i^h) \tag{3}$$

$$= \frac{\beta_i^{j,k}}{\psi_{sp(s_i^{j,k})}} + \sum_{h=1}^{l} \frac{\gamma(s_i^{j,k}, d_i^h)}{v_{dp(d_i^h),sp(s_i^{j,k})}} + rtt_{dp(d_i^h),sp(s_i^{j,k})} \tag{4}$$

a finish time $\overset{x}{FT}(s_i^{j,k})$ of $s_i^{j,k}$ is the sum of a start time and an occupied time on the node $sp(s_i^{j,k})$, computed as follows:

$$\overset{\lambda_i}{FT}(s_i^{j,k}) = \overset{\lambda_i}{ST}(s_i^{j,k}) + OT(s_i^{j,k}) \tag{5}$$

a start time when the application $a_i$ is executed for the $\lambda_i^{th}$ time is a task arrival time $\overset{\lambda_i}{AT}(s_i^{1,1})$ of the first program fragment $s_i^{1,1}$ executing the primary service, and the finish time is a time $\overset{\lambda_i}{FT}(s_i^{1,f})$ when the last fragment $s_i^{1,f}$ of the primary service is executed, wherein the response time $\overset{\lambda_i}{RT}(a_i)$ when the application $a_i$ is executed for the

$\lambda_i^{th}$ time is computed as follows:

$$RT(a_i) = \overset{\lambda_i}{FT}(s_i^{1,f}) - \overset{\lambda_i}{AT}(s_i^{1,1}) \qquad (6)$$

when the computing node $sp(s_i^{j,k})$ is executed, a using overhead of the program fragment $s_i^{j,k}$ occupying the node is computed as follows:

$$NC(s_i^{j,k}) = OT(s_i^{j,k})c_{sp(s_i^{j,k})}^{com} \qquad (7)$$

during execution of the program fragment $s_i^{j,k}$, a transmission overhead generated by interaction between the imported data and the database is computed as follows:

$$TC(s_i^{j,k}) = IT(s_i^{j,k})c_{sp(s_i^{x,y}),sp(s_i^{j,k})}^{tran} + \sum_{h=1}^{l} DT(s_i^{j,k}, d_i^h)c_{dp(d_i^h),sp(s_i^{j,k})}^{tran} \qquad (8)$$

The money overhead $MC(s_i^j)$ generated by invoking the service $s_i^j$ once is the sum of the using overheads and the transmission overheads of all the program fragments included by the service, computed as follows:

$$MC(s_i^j) = \sum_{k=1}^{f}(NC(s_i^{j,k}) + TC(s_i^{j,k})) \qquad (9)$$

The money overhead $MC(a_i)$ by executing the application $a_i$ once is the sum of products between the money overheads of all services and the number of times when the services are invoked, computed as follows:

$$MC(a_i) = \sum_{j=1}^{o} MC(s_i^j)s_i^j.Time \qquad (10)$$

An optimization object of the unloading solution generating algorithm is to obtain an unloading solution for services and databases to minimize the total money overhead under the condition that the response time of each application satisfies the time constraint within the time period $\theta$, and finally, a formalized definition of the application unloading problem is as follows:

$$\begin{cases} MC_{total} = \min \sum_{i=1}^{g} MC(a_i)\xi_i \\ \overset{\lambda_i}{RT}(a_i) \le dl_i \qquad \forall i = 1,...,g \quad \forall \lambda_i = 1,...,\xi_i \end{cases} \qquad (11).$$

Further, a specific implementation method for the unloading solution generating algorithm based on the multi-task particle swarm optimization-genetic algorithm is as follows:
a coding strategy of the unloading solution generating algorithm satisfies the following three principles:

> integrity: each candidate solution in a problem space can be encoded into a corresponding coding particle;
> non-redundancy: each candidate solution in the problem space only corresponds to one coding particle; and
> viability: each coding particle in a code space can correspond to the candidate solution in the problem space;
> the coding strategy uses the particle $Z$ to represent a candidate solution for cost driven unloading of all services and databases in the MEC environment, wherein the $i^{th}$ particle in the $t^{th}$ iteration is described as (12):

$$\mathbf{Z}_i^t = (z_{i,1}^t, z_{i,2}^t, ...., z_{i,p}^t, z_{i,p+1}^t, ...., z_{i,p+q}^t) \quad (12)$$

$$z_{i,k}^t = (n_j)_{i,k}^t \quad (13)$$

where p and q respectively represent total quantities of the services and databases in the whole system; in the equation (13), $z_{i,k}^t (k = 1, 2, ..., p)$ represents the $i^{th}$ particle for the $t^{th}$ iteration of the $k^{th}$ service deployed by the computing node $n_j$, and $z_{i,k}^t (k = p+1, p+2, ..., p+q)$ represents the $i^{th}$ particle for the $t^{th}$ iteration of the (k-q)$^{th}$ database deployed by the computing node $n_j$;

each code bit of the particle represents the deployment address of the corresponding service or database, satisfying a completeness principle; different coding particles respectively represent different unloading solutions, and a certain feasible solution in the problem space only corresponds to one coding particle in the code space, satisfying a non-redundancy principle; however, some candidate solutions corresponding to the particle may not satisfy an expiration date constraint, so that the response times of some applications exceed a time limit, thereby, not satisfying a survival principle; all particles are divided into two categories:

feasible particles: in an unloading strategy corresponding to the particles, each application satisfies the expiration date constraint; and
infeasible particles: in the unloading strategy corresponding to the particles, execution of at least a certain application cannot satisfy the expiration date constraint;
to compare different particles, a fitness function is adopted to measure; the particles with small fitness represent better candidate solutions; because some solutions may make the response times of the applications exceed a stipulated expiration date, the particles are compared in the following three circumstances:

circumstance 1: one particle is the feasible solution while the other is the infeasible solution; and in this case, the feasible solution is selected, with the fitness function thereof being defined as follows:

$$F(Z_i^t) = \begin{cases} 0, & if \ \forall j \ \forall \lambda_j, \overset{\lambda_j}{RT}(a_j)_{Z_i^t} \le dl_j \\ 1, & else \end{cases} \quad (14)$$

circumstance 2: the two particles both are the infeasible solutions; the particle with a smaller sum with a deadline difference because the particle is closer to the feasible solution and may be turned into the feasible solution in subsequent evolution, with the fitness function thereof being defined as follows:

$$F(Z_i^t) = \sum_{j=1}^{g} \sum_{\lambda_j=1}^{\xi_j} \left( \overset{\lambda_j}{RT}(a_j)_{(Z_i^t)} - dl_j \right) \quad (15)$$

circumstance 3: the two particles both are the feasible solutions; the particle with lower money overhead is selected, with the fitness function thereof being defined as follows:

$$F(Z_i^t) = MC_{total(Z_i^t)} \quad (16)$$

Further, an implementation flow of the MPSO-GA is as follows:

S1: initializing related parameters of the MPSO-GA, including an initial swarm size $\delta$, a maximum iteration number

of times $iters_{max}$, a maximum inertia weight $\varepsilon_{max}$, a minimum inertia weight $\varepsilon_{min}$, an initial value and a finish value $\sigma_p^{star}$ $\sigma_g^{star}$ $\sigma_p^{end}$ and $\sigma_g^{end}$ of the acceleration coefficient; and then randomly generating an initial total;

S2: calculating fitness of each particle according to equations (14)-(16); and selecting the optimal solution of each particle itself, and selecting the particle with the optimal fitness as the globally optimal solution in the current generation;

S3: updating each particle according to the equation (13), and re-calculating the fitness of each particle;

S4: updating the optimal individual particle of each particle; and if there is a solution better than an original particle, updating the globally optimal particle; and

S5: if an iteration stopping condition is satisfied, finishing the algorithm; and otherwise, returning to S3 for continuous iteration.

Compared with the prior art, the present invention has the following beneficial effects: provided is a method for supporting adaptive unloading of multi-Internet of Things (IoT) applications in an edge environment, including the following steps: constructing an application compliant with a universal program structure supporting on-demand computing unloading; for the application compliant with the structure, extracting a program fragment flowchart through static code analysis; analyzing a program fragment flowchart and a context through an unloading solution generating algorithm based on a multi-task particle swarm optimization-genetic algorithm; and finally, performing, by each application, computing unloading by taking a service as a particle size according to the unloading solution to minimize the overhead under a circumstance that a deadline constraint of each application is satisfied. The method supports the computing unloading by different types of applications taking the service as the particle size. Compared with other classical methods, 2.11-17.51% of the system cost can be saved under the circumstance that the deadline constraint is satisfied.

## BRIEF DESCRIPTION OF THE DRAWINGS

FIG. 1 is a schematic diagram of implementing a method in an embodiment of the present invention.
FIG. 2 is a schematic diagram of a design mode supporting on-demand computing unloading in the embodiment of the present invention.
FIG. 3 shows two types of services included in an application in the embodiment of the present invention.
FIG. 4 is a schematic diagram of analyzing the application in the embodiment of the present invention.
FIG. 5 is a schematic diagram of a coding particle in an unloading solution in the embodiment of the present invention.
FIG. 6 is a schematic diagram of mutation operation in the embodiment of the present invention.
FIG. 7 is a schematic diagram of a crossover operation in the embodiment of the present invention.
FIG. 8 is a flowchart of implementing an MPSO-GA in the embodiment of the present invention.
FIG. 9 is a schematic diagram of an application execution condition in different scenarios in the embodiment of the present invention.
FIG. 10 is a schematic diagram of comparing response times of applications in the embodiment of the present invention.

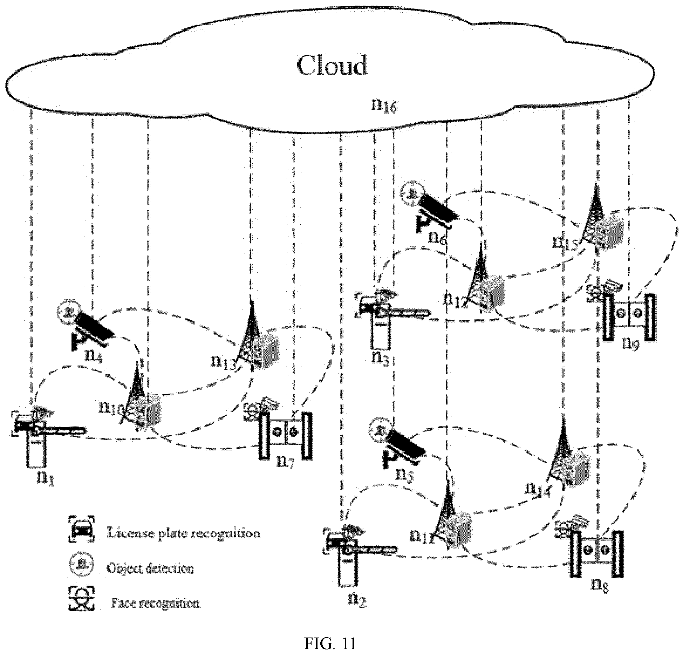

FIG. 11 is a schematic diagram of an application scenario in the embodiment of the present invention.
FIG. 12 shows system costs of different unloading strategies under different expiration data constraints in a simple network environment in the embodiment of the present invention.
FIG. 13 shows system costs of different unloading strategies under different expiration data constraints in a complicated network environment in the embodiment of the present invention.

## DETAILED DESCRIPTION OF THE EMBODIMENTS

Further description of the present invention will be made below in combination with drawings and embodiments.
It is to be noted that the detailed description below is exemplary and is intended to further describe the application. Unless specified otherwise, all technical and scientific terms used herein have the same meaning as commonly understood by those of ordinary skill in the art to which the application belongs.
It should be noted that the terms used herein are merely to describe specific implementation modes rather than being intended to limit the exemplary implementation modes according to the present application. As used herein, unless otherwise specified in the context, the singular form is further intended to include plural form. In addition, it is to be further understood that when the terms "comprise" and/or "include" are used in the description, it indicates that there are features, steps, operations, apparatuses, assemblies and/or their combinations.

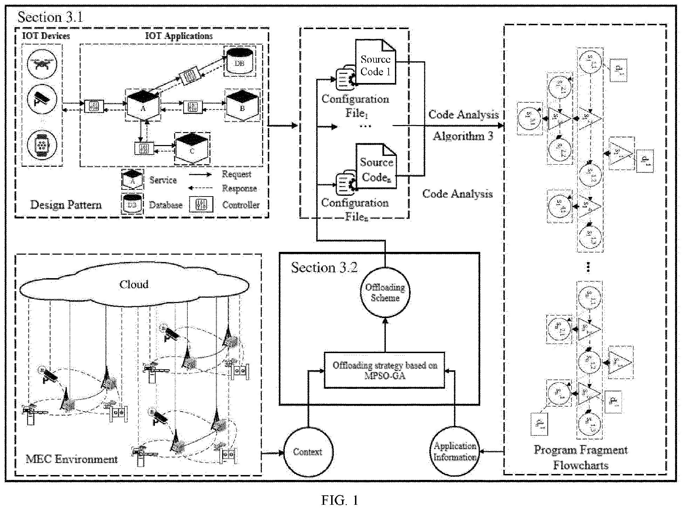

As shown in FIG. 1, the embodiment provides a method for supporting adaptive unloading of multi-Internet of Things (IoT) applications in an edge, including the following steps:

> 1. Constructing an application compliant with a universal program structure supporting on-demand computing unloading.
> 2. For the application compliant with the universal program structure supporting on-demand computing unloading, extracting a program fragment flowchart through static code analysis to provide internal flow information of the application for generation of an unloading solution.
> 3. Analyzing a peripheral mobile edge computing (MEC) environment and the application through an unloading solution generating algorithm based on a multi-task particle swarm optimization-genetic algorithm (MPSO-GA) to obtain the optimal unloading solution.
> 4. Performing, by the application, computing unloading by taking a service as a particle size according to the unloading solution to minimize a system overhead under a circumstance that a deadline constraint of each application is satisfied.

## 1. Overview of the method

FIG. 1 shows an implementation principle of the method. For the nodes in FIG. 1, we use circles to represent different types of operating data, and squares to represent algorithms. The method mainly includes two portions: an upper half portion represents an unloading enabling mechanism and a lower half portion represents the unloading solution generating algorithm.

The unloading enabling mechanism is a key component through which the application can perform computing unloading. The method designs a design mode with universality supporting on-demand computing unloading and proposes a corresponding program structure. The application compliant with the program structure is capable to decouple a plurality of services, and different services can be executed in a distributed manner at different computing nodes (including the IoT equipment, cloud and edge). The application determines specific computing nodes according to configuration files in the executive process, so as to achieve on-demand unloading of the program. Moreover, the application can obtain the program fragment flowchart through static code analysis to support generation of a subsequent unloading strategy.

The unloading solution generating algorithm analyzes the peripheral MEC environment and the application to obtain the optimal unloading solution. The method carries out formalized definition on the application unloading problem to be optimized by establishing a system model, an application model, and a performance model. An unloading solution for services and databases is generated through an MPSO-GA, so that of each application minimizes the overall money overhead under the circumstance that a cut-off constraint is satisfied.

## 2. Unloading mechanism

### 2.1 Design mode

As a conventional single application cannot be split, the application only can be executed on the IoT equipment or a remote server based on the overall application. To achieve on-demand computing unloading of the application, the method provides the design mode where different types of applications are independently deployed and executed in modules to design a universal program structure supporting on-demand computing unloading. The design mode satisfies the following properties:

> (1) Independence: each module of the application is capable of being independently deployed and executed at different computing nodes.
> (2) Validity: the module is capable to determine the computing modes where the invoked modules or the database are located to guarantee the invoking validity.
> (3) Correctness: the invoked module is capable to receive the input of the invoking module and return a correct executive result.

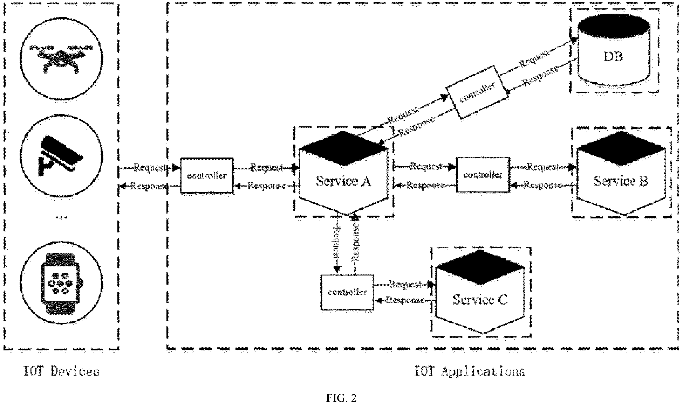

The present invention provides an application design mode to satisfy the above attributes, as shown in FIG. 2. The mode regards the application as a primary service formed by a plurality of loosely coupled and cooperatively interconnected services. Each service will not affect other services in the executive process to ensure that the service can be independently deployed and executed at the computing nodes. The service has to invoke the services or databases through a controller. The controller is responsible for confirming the deployment positions of the services or databases and supporting data transmission, so as to ensure that the services are capable of being proceeded correctly.

## 2.2 Program structure

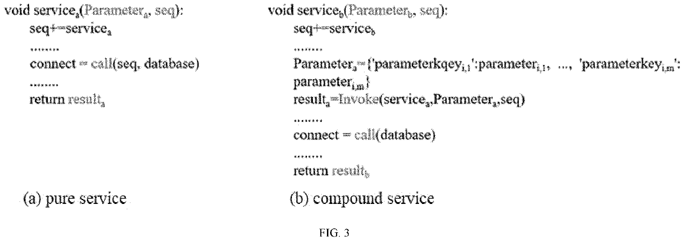

In the method, provided is a program structure of an application to satisfy the design mode in FIG. 2. There are two types of services in the application compliant with the design mode: a pure service, using local data without invoking other services (shown in FIG. 3(a)); a compound service, relying on data from other services and required to invoke other services (shown in FIG. 3(b)). The service mainly includes the following attributes:

(1) Params/result (key-value type data): all external variables required by an invoked service in an execution process are imported through Params, i.e., there is no sentence accessing to the external variables in the service. When the service needs to modify the external variables, the external variables are exported by virtue of result. The external variables refer to variable accessed in the execution process of the service and defined outside the service. Therefore, each service is stateless, so that the independence of the service is ensured.

(2) seq (a character string type): a character string seq is maintained in the application, and an invoke path from a current service to a primary service is recorded. To maintain the seq, when the service is invoked, the seq is imported in the form of parameter, and a name of the invoked service is added into the seq.

(3) Invoke (function): the compound service needs to invoke other services through the Invoke function. The Invoke function achieves two functions: 1) the Invoke function controls forwarding: whether the service is locally executed or remotely invoked is determined, and if the service is remotely invoked, which computing node invoking the service is determined. (2) Data transmission: all parameters required by the invoked service are serialized, and the returned service executive result is deserialized. A pseudocode algorithm 1 of the Invoke function is shown as follows:

---

Algorithm1: Invoke

---

**Input:** $ServiceName_i$, $Params_i$, Seq

**Variables:** SP

**Output:** result

```
1   procedure Invoke (ServiceNameᵢ, Paramsᵢ, Seq)
2       Address = SP [Seq + ServiceNameᵢ]
3       If Address == Local then
4           result = local (ServiceNameᵢ, Paramsᵢ, Seq)
5           return result
6       Else
7           result = remote (ServiceNameᵢ, Paramsᵢ, Seq)
8           return result
9       end If
10  end procedure
```

---

First, the invoking path from the service to be invoked to the primary service is determined through seq and serviceName, and the address where the service is executed is determined from the configuration file SP according to the invoking path. SP stores deployment addresses (the $2^{nd}$ line) of different services. If the address is equal to Local, a local function locally executes the service directly and returns a result. It is to be noted that the Local here represents the computing node when the service is invoked, (the $3^{rd}$-$6^{th}$ lines). If the address is not equal to Local, the $service_i$, $Parameter_i$, and seq are sent to an agent program at a remote node through a remote function, and a remote agent invokes the $service_i$ through a reflection mechanism and finally returns a result. (The $7^{th}$-$9^{th}$ lines)

(4) Call (function): the service shall establish a connection with the database through the Call function. The Call function determines an address of the database through a name of the database to be interacted and is turned to a connecting channel for data transmission with the database, so as to ensure normal data interaction between the service and the database. As shown in an algorithm 2 specifically,

```
Algorithm2: call
Input: seq, database
Variables: DP, Account
Output: connect
    1    procedure call(database)
    2        host = DP [ database]
    3        user = Account [host+ database].name
    4        password = Account [host+ database]. pass
    5        connect = mysql. connect (host, user, password,
             database)
    6        return connect
    7    end procedure
```

First, the deployment address host of the database is determined from a configuration file DP, and DP stores the deployment addresses of different databases according to DatabaseName$_i$ (the 2$^{nd}$ line). Then corresponding users and passwords (the 3$^{rd}$-4$^{th}$ lines) are acquired from Accounts recording the database names and passwords through the host and database; and finally, a data transmission channel is established, and the channel (the 5$^{th}$-6$^{th}$ lines) is returned.

In conclusion, "Params;" and "result;" ensure the independence of the service. The controller formed by "seq", "Invoke", and "call" ensures the validity and correctness of the service invoking other services and databases in the executive process.

## 2.3 Application analysis

To provide internal flow information of the program to generate the subsequent unloading solution, it is needed to analyze the program. In the present invention, the program fragment flowchart is extracted through static code analysis, with an implementation method as follows:

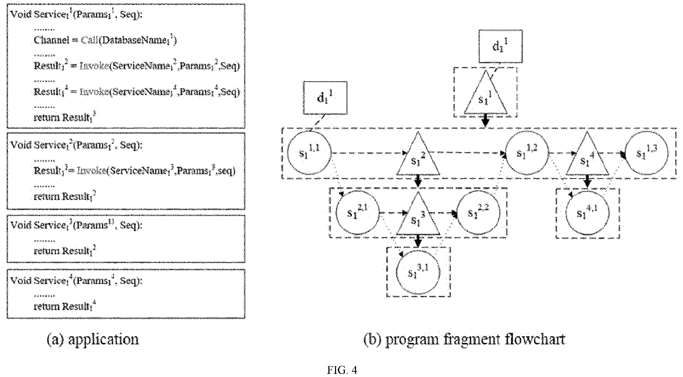

first, an unloaded content, i.e., a quantity of the services and databases in the application needs to be determined, the databases being uniquely identified by names according to stipulation in 2.2, and the services being uniquely identified by the invoking paths from the service to the primary services. Then, the unloading solution needs to be evaluated; the method further divides each of the services into program fragments and records an execution sequence of the fragments. Finally, in the method, the application is modeled as the program fragment flowchart. FIG. 4 is an example of analyzing the application. For lines in FIG. 4, solid lines represent that the service is split into program fragments, a broken line represents an executive process inside the service, and dotted lines represent an actual executive flow of the program fragments in the application.

The program fragment flowchart of the i$^{th}$ application is represented by a symbol $Flow_i = (D_i, S_i, P_i, Q_i)$.

$$D_i = \left\{ d_i^1, d_i^2, \ldots, d_i^l \right\}$$ represents a set of databases in the application, and $d_i^j.Name$ is used to represent a name of the database $d_i^j$. $$S_i = \left\{ s_i^1, s_i^2, \ldots, s_i^o \right\}$$ represents a set of services in the application, and $s_i^j.Name$ is used to represent a name of the service $s_i^j$. $s_i^j.callSeq$ represents an invoking path from the service $s_i^j$ to the primary service $s_i^1$. $s_i^j.Time$ represents the total number of times that the service $s_i^j$ is invoked. In the presence of service invoking, each service is segmented into a plurality of serial code fragments in the actual executive process, i.e., $$s_i^j = \left\{ s_i^{j,1}, s_i^{j,2}, \ldots, s_i^{j,f} \right\}$$. $P_i$ is a set which records an actual program fragment executive sequence, and the program fragments in the set can be repeated. The sequence in which the program fragments are added into the set is the actual executive sequence in the application. For two adjacent fragments, in the method, the previous fragment is called as a precursor fragment of a next fragment. $Q_i$ represents a set which records correlations between the program fragments and the databases, where $(s_i^{j,k}, d_i^h) \in Q_i$ represents that there is an interaction between $s_i^{j,k}$ in the executive process and the database $d_i^h$ .

Each of the code fragments is defined as a triad $s_i^{j,k} = \left\langle \alpha_i^{j,k}, \beta_i^{j,k}, \gamma\left(s_i^{j,k}, d_i^h\right) \right\rangle$ , where $\alpha_i^{j,k}$ represents a size of data imported into a fragment $s_i^{j,k}$ ; $\beta_i^{j,k}$ represents a task load of a fragment $s_i^{j,k}$ ; and $\gamma\left(s_i^{j,k}, d_i^h\right)$ represents a total size of data of a fragment $s_i^{j,k}$ in the executive process and a database $d_i^h$ interacting with each other, and if there is no interaction, it is set to be 0. (as prediction of specific information of the program fragments is not the content studied by the method, development personnel need to provide it in the format of json.)

The addresses of the Invoke function and the Call function in source codes are analyzed by a static code analysis technology to obtain a program fragment flowchart $Flow_i = (D_i, S_i, P_i, Q_i)$ of the application i, with a pseudocode shown in an algorithm 3.

---

**Algorithm 3** Extracting the program segment flow chart from i-th program

---

**Input:** The source code of the i-th program
        The service name of the main service
**Output:** A program segment flow chart $Flow_i = (D_i, S_i, P_i, Q_i)$

```
1:  function GETFLOW(s_i^a, U_i^a)
2:      pId ← 1, s_i^a ← s_i^a + s_i^{a,pId}, P_i ← P_i + s_i^{a,pId}
3:      for each u_i^{a,j} ∈ U_i^a do
4:          keywords ← GETKEYWORDS(u_i^{a,j})
5:          if ∃"invoke" ∈ keywords then
6:              Name ← GETSERVICE(u_i^{a,j})
7:              callSeq ← s_i^a.callSeq + Name
8:              if ∃s_i^c ∈ s_i and s_i^c.callSeq == callSeq then
9:                  s_i^c.Time ← s_i^c.Time + 1, s_i^b ← s_i^c
10:             else
11:                 s_i^b.Name ← Name, s_i^b.callSeq ← callSeq
12:                 s_i^b.Time ← 1, S_i ← S_i + s_i^b
13:             end if
14:             U_i^b ← GETUNITS(s_i^b.Name)
15:             pId ← pId + 1, s_i^a ← s_i^a + s_i^{a,pId}, P_i ← P_i + s_i^{a,pId}
16:             GETFLOW(s_i^b, U_i^b)
17:         end if
18:         if ∃"call" ∈ keywords then
19:             Name ← GETDATABASE(u_i^{a,j})
20:             if ∃d_i^h ∈ D_i and d_i^h.Name == Name then
21:                 d_i^k ← d_i^h
22:             else
23:                 d_i^k.Name ← Name, D_i ← D_i + d_i^k
24:             end if
25:             if (s_i^{a,pId}, d_i^k) ∉ Q_i then
26:                 Q_i ← Q_i + (s_i^{a,pId}, d_i^k)
27:             end if
28:         end if
29:     end for
30: end function
31: s_i^1.Name ← main(), s_i^1.callSeq ← s_i^1.Name, s_i^1.Time ← 1
32: U_i^1 ← GETUNITS(s_i^1.Name)
33: S_i ← S_i + s_i^1, D_i ← φ, P_i ← φ, Q_i ← φ
34: GETFLOW(s_i^1, U_i^1)
```

---

By taking the source codes of the ith application and the service name of the primary service as inputs, the algorithm 3 constructs the corresponding program fragment flowchart, including the following steps: first, assigning information of the primary service to $s_i^1$ , and extracting a corresponding sentence set $U_i^1$ through $s_i^1.Name$ , corre-

sponding to the 31st-32nd lines; then adding the primary service $s_i^1$ into a null set $S_i$, and setting $D_i$, $P_i$, and $Q_i$ to be null, corresponding to the 33rd line; and finally, invoking a getFlow() function to construct the program fragment flowchart in recursive fashion, corresponding to the 34th line. The step of getFlow() function corresponds to the 1st to 30th lines; and $s_i^a$ and $U_i^a$ are taken as inputs of the function to respectively represent the currently analyzed service and the sentence set corresponding to the service. In the 2nd line, *pld* is used to record the number of the current program fragment, the number of the current program fragment is initialized as 1, and the current program fragment $s_i^{a,pld}$ is added into $s_i^a$ and $P_i$. Each sentence in the sentence set is operated as follows: acquiring keywords in the sentence $u_i^{a,j}$, corresponding to the 4th line. If the keywords include the keyword 'invoke', whether the invoked service has appeared is judged according to the invoking path *callSeq*. If the invoked service has appeared, the invoking number of time is added with 1; if the invoked service has not appeared, $S_i$ is added, and the corresponding sentence set is obtained through the service name, corresponding to the 5th-14th lines. In the 15th line, *pld* is updated, and the current new program fragment $s_i^{a,pld}$ is added into $s_i^a$ and $P_i$. In the 16th line, the service $s_i^b$ is subjected to getFlow() recursion. If the keywords in the sentence $u_i^{a,j}$ include the keyword "call", in a similar way, whether the database $d_i^k$ has been in the set $D_i$ is judged first, and if the database is not in the set, the database is added. Then, whether ($s_i^{a,pld}, d_i^h$) has been in the set $Q_i$ is judged. If not, it is added, corresponding to the 18th-29th lines.

### 3 Unloading solution generating algorithm

The unloading solution generating algorithm describes the application unloading problem in the MEC environment from the network model, the application model and the performance model. The network model describes "the network environment of the application"; the application model defines "a plurality of applications compliant with the program structure proposed in the method to be unloaded"; and the performance model corresponds to "the content of attempt to optimize" (introduced respectively in 3.1, 3.2, and 3.3); then, the problem to be solved by the method is described according to the above three models (section 3.4); and finally, the application unloading problem is solved through the MPSO-GA (section 3.5).

### 3.1 Network model

The network environment includes a cloud server (CS), a plurality of edge servers (ES), and a plurality of IoT equipment (DS). The MEC environment is modeled as a map $G = (N,E)$ including a set $N = \{n_1,n_2,...,n_w\}$ of the computing nodes, and a set $E$ is used to represent sub-connections thereamong. The computing node is represented by $n_i = <\psi_i, \omega_i, c_i^{com}>$, where $\psi_i$ represents the computing capacity of the computing node $n_i$, which is usually measured by a CPU; as the method mainly focuses on seeking for the unloading solution in the study, we assume that the storage capacity of each node is capable to satisfy the corresponding demand; $\omega_i$ represents the number of tasks capable of being executed by the node $n_i$ at most, and its value is equal to the nuclear number of the node; $c_i^{com}$ represents the computing cost of the computing node $n_i$ per second. $e_{i,j}$ represents a connection between $n_i$ and $n_j$, which is related to the bandwidth $v_{i,j}$ and the minimum link delay $rtt_{i,j}$. $c_{i,j}^{tran}$ is used to represent the transmission overhead between the nodes $n_i$ and $n_j$ per second.

### 3.2 Application modeling

It is assumed that there will be a system going to be executed for a time $\theta$ in the unloading process. There are a plurality of applications $A = \{a_1,a_2,...,a_g\}$ from IoT equipment in the system and the applications $a_i$ are executed at a

time interval of $\mu_i$, so each application is executed for $\xi_i = \theta / \mu_i$ times within a time period $\theta$, and $dl_i$ is used to represent a blocking time of the application $a_i$. Each of the applications is compliant with a universal program structure. The application is modeled as the program fragment flowchart $Flow_i = (D_i, S_i, P_i, Q_i)$ according to 2.3.

**3.3 Performance modeling**

To compute the response time and the money overhead of the application, an unloading solution corresponding to the service and database has to be appointed. $SP_i = \{sp(s_i^1), sp(s_i^2), ..., sp(s_i^o)\}$ represents the deployment

address of the service in the application $a_i$. As far as each program fragment $s_i^{j,k}$ is concerned, the executive address is dependent on the deployment address of the service $s_i^j$, i.e., $sp(s_i^{j,k}) = sp(s_i^j)$.

$DP_i = \{dp(b_i^1), dp(b_i^2), ..., dp(b_i^l)\}$ represents the deployment address of the database in the application $a_i$.

**3.3.1 Response time of the application**

In the $\lambda_i^{th}$ executive process of the application $a_i$, $\overset{\lambda_i}{AT}(s_i^{j,k})$ is used to represent a time when a task executing the program fragment $s_i^{j,k}$ arrives at the computing node. A time when the fragment is actually executed is presented

as $\overset{\lambda_i}{ST}(s_i^{j,k})$; $\overset{\lambda_i}{WT}(s_i^{j,k})$ represents a queuing time of the fragment on the node, wherein:

$$\overset{\lambda_i}{WT}(s_i^{j,k}) = \overset{\lambda_i}{ST}(s_i^{j,k}) - \overset{\lambda_i}{AT}(s_i^{j,k}) \qquad (1)$$

A data importing time when the precursor fragment $s_i^{x,y}$ transfers the data to the program fragment $s_i^{j,k}$ is as follows:

$$IT(s_i^{j,k}) = \frac{\alpha_i^{j,k}}{v_{sp(s_i^{x,y}),sp(s_i^{j,k})}} + rtt_{sp(s_i^{x,y}),sp(s_i^{j,k})} \qquad (2)$$

A time $OT(s_i^{j,k})$ when the program fragment $s_i^{j,k}$ occupies the node $sp(s_i^{j,k})$ comprises a self-task

execution time $ET(s_i^{j,k})$ and a data transmission time $DT(s_i^{j,k}, d_i^h)$ between different databases during execution,

where $OT(s_i^{j,k})$ is computed as follows:

$$OT(s_i^{j,k}) = ET(s_i^{j,k}) + \sum_{h=1}^{l} DT(s_i^{j,k}, d_i^h) \qquad (3)$$

$$= \frac{\beta_i^{j,k}}{\psi_{sp(s_i^{j,k})}} + \sum_{h=1}^{l} \frac{\gamma(s_i^{j,k}, d_i^h)}{v_{dp(d_i^h),sp(s_i^{j,k})}} + rtt_{dp(d_i^h),sp(s_i^{j,k})} \qquad (4)$$

A finish time $\overset{x}{FT}(s_i^{j,k})$ of $s_i^{j,k}$ is the sum of a start time and an occupied time on the node $sp(s_i^{j,k})$, computed as follows:

$$\overset{\lambda_i}{FT}(s_i^{j,k}) = \overset{\lambda_i}{ST}(s_i^{j,k}) + OT(s_i^{j,k}) \quad (5)$$

A start time when the application $a_i$ is executed for the $\lambda_i$th time is a task arrival time $\overset{\lambda_i}{AT}(s_i^{1,1})$ of the first program fragment $s_i^{1,1}$ executing the primary service, and the finish time is a time $\overset{\lambda_i}{FT}(s_i^{1,f})$ when the last fragment $s_i^{1,f}$ of the primary service is executed. The response time $\overset{\lambda_i}{RT}(a_i)$ when the application $a_i$ is executed for the $\lambda_i$th time is computed as follows:

$$\overset{\lambda_i}{RT}(a_i) = \overset{\lambda_i}{FT}(s_i^{1,f}) - \overset{\lambda_i}{AT}(s_i^{1,1}) \quad (6)$$

### 3.3.2 Money overhead of the application

When the computing node $sp(s_i^{j,k})$ is executed, a using overhead of the program fragment $s_i^{j,k}$ occupying the node is computed as follows:

$$NC(s_i^{j,k}) = OT(s_i^{j,k}) c_{sp(s_i^{j,k})}^{com} \quad (7)$$

during execution of the program fragment $s_i^{j,k}$, a transmission overhead generated by interaction between the imported data and the database is computed as follows:

$$TC(s_i^{j,k}) = IT(s_i^{j,k}) c_{sp(s_i^{x,y}),sp(s_i^{j,k})}^{tran} + \sum_{h=1}^{l} DT(s_i^{j,k}, d_i^h) c_{dp(d_i^h),sp(s_i^{j,k})}^{tran} \quad (8)$$

the money overhead $MC(s_i^j)$ generated by invoking the service $s_i^j$ once is the sum of the using overheads and the transmission overheads of all the program fragments included by the service, computed as follows:

$$MC(s_i^j) = \sum_{k=1}^{f} (NC(s_i^{j,k}) + TC(s_i^{j,k})) \quad (9)$$

The money overhead $MC(a_i)$ by executing the application $a_i$ once is the sum of products between the money overheads of all services and the number of times when the services are invoked, computed as follows:

$$MC(a_i) = \sum_{j=1}^{o} MC(s_i^j) s_i^j.Time \quad (10)$$

### 3.4 Problem expression

The optimization object of the method is to obtain an unloading solution for services and databases to minimize the total money overhead under the condition that the response time of each application satisfies the time constraint within the time period $\theta$. Finally, a formalized definition of the application unloading problem is as follows:

$$\begin{cases} MC_{total} = \min \sum_{i=1}^{g} MC(a_i)\xi_i \\ RT(a_i) \leq dl_i \quad \forall i = 1,...,g \quad \forall \lambda_i = 1,...,\xi_i \end{cases} \quad (11)$$

### 3.5 MPSO-GA

For the unloading solutions *SP* and *DP,* it is aimed to explore the optimum mapping from the services and the databases to different computing nodes, so as to minimize the total money overhead under the circumstance that the deadline constraint of each application is satisfied. To explore the optimum mapping from the services and the databases to the computing nodes has been proved a NP problem. A conventional PSO has been widely applied to solving a continuous optimization problem. The optimum mapping from the services and the databases to the computing nodes is a discrete problem which needs a novel encoding method. In addition, to avoid premature convergence of a conventional particle swarm optimization, it is needed to introduce an appropriate particle updating strategy. To overcome the defects of the conventional PSO algorithm, the method provides an MPSO-GA to explore the optimal unloading strategy of multiple tasks in the MEC environment. The application unloading strategy based on MPSO-GA is described below.

(1) Problematic codes

A good coding strategy can improve the search efficiency and performance of the PSO algorithm, and the coding strategy of the algorithm satisfies the following three principles:

Definition 1 (integrity): each candidate solution in a problem space can be encoded into a corresponding coding particle.
Definition 2 (non-redundancy): each candidate solution in the problem space only corresponds to one coding particle.
Definition 3 (viability): each coding particle in a code space can correspond to the candidate solution in the problem space.

A usual coding strategy hardly satisfies the three principles at the same time. The method uses the particle *Z* to represent a candidate solution for cost driven unloading of all services and databases in the MEC environment, where the $i^{th}$ particle in the $t^{th}$ iteration is described as (12):

$$\mathbf{Z}_i^t = (z_{i,1}^t, z_{i,2}^t, ...., z_{i,p}^t, z_{i,p+1}^t, ...., z_{i,p+q}^t) \quad (12)$$

$$z_{i,k}^t = (n_j)_{i,k}^t \quad (13)$$

where p and q respectively represent total quantities of the services and databases in the whole system. In the equation (13), $z_{i,k}^t (k=1,2,...,p)$ represents the $i^{th}$ particle for the $t^{th}$ iteration of the $k^{th}$ service deployed by the computing node $n_j$, and $z_{i,k}^t (k=p+1,p+2,...,p+q)$ represents the $i^{th}$ particle for the $t^{th}$ iteration of the $(k-q)^{th}$ database deployed by the computing node $n_j$.

Property 1: the coding strategy is capable to satisfy the integrity and non-redundancy at the same time, but is unnecessarily capable to satisfy the viability.

Each code bit of the particle represents the deployment address of the corresponding service or database, thereby satisfying the principle of integrity. Different encoding particles respectively represent different unloading solutions. A certain feasible solution in a problem space only corresponds to one encoding particle in the code space, thereby satisfying the principle of non-redundancy. However, some candidate solutions corresponding to the particles may not satisfy the expiration date constraint, i.e., the response times of some applications exceed the time limit, so that the principle of viability cannot be satisfied. In the method, all particles can be divided into two categories: feasible particles and infeasible particles, defined below.

Definition 4: (feasible particles): in an unloading strategy corresponding to the particles, each application satisfies the expiration date constraint.

Definition 5: (infeasible particles): in the unloading strategy corresponding to the particles, execution of at least a certain application cannot satisfy the expiration date constraint.

(2) Fitness function

To compare different particles, it is needed to measure the particles with the fitness function. Usually, the particles with small fitness represent better candidate solutions. This work pursues an unloading solution, which satisfies the expiration data constraint of each application while minimizing the total money overhead. Therefore, the particles with the lower money overhead can be regarded as better solutions. Because some solutions may make the response times of the applications exceed a stipulated expiration date, the particles are compared in the following three circumstances:

circumstance 1: one particle is the feasible solution while the other is the infeasible solution. In this case, the feasible solution is selected, with the fitness function thereof being defined as follows:

$$F(Z_i^t) = \begin{cases} 0, & if \ \forall j \ \forall \lambda_j \ , \overset{\lambda_j}{RT}(a_j)_{Z_i^t} \leq dl_j \\ 1, & \text{else} \end{cases} \quad (14)$$

Circumstance 2: the two particles both are the infeasible solutions. The particle with a smaller sum with a deadline difference because the particle is closer to the feasible solution and may be turned into the feasible solution in subsequent evolution, with the fitness function thereof being defined as follows:

$$F(Z_i^t) = \sum_{j=1}^{g} \sum_{\lambda_j=1}^{\xi_j} \left( \overset{\lambda_j}{RT}(a_j)_{(Z_i^t)} - dl_j \right) \quad (15)$$

Circumstance 3: the two particles both are infeasible solutions. The particle with lower money overhead is selected, with the fitness function thereof being defined as follows:

$$F(Z_i^t) = MC_{total(Z_i^t)} \quad (16)$$

(3) Updating strategy:

Conventional particle swarm optimization includes three major parts: inertia, individual cognition, and social cognition. Iterative update of each particle is affected by the individual optimum address and the globally optimal address of the current generation. Premature falling into global local optimum is a major defect of the particle swarm optimization algorithm. To improve the search ability of the algorithm, the method introduces the crossover operator and the mutation operator of the genetic algorithm for particle update. An iterative update of the $i^{th}$ particle in the $(t+1)^{th}$ iteration is shown in the equation (17):

$$Z_i^{t+1} = F_g(F_p(F_u(Z_i^t, \varepsilon, \phi_u), pBest_i^t, \sigma_p, \phi_p), gBest^t, \sigma_g, \phi_g) \quad (17)$$

where $F_u()$ represents mutation operation, $F_g()$ and $F_p()$ represents crossover operations, and $\varepsilon$ is the inertial weight. $\sigma_p$ and $\sigma_g$ are acceleration coefficients. $\phi_u$, $\phi_p$, and $\phi_g$ are the random numbers in the interval of [0,1].

For an inertial portion, a velocity of the particle is defined as:

$$X_i^{t+1} = F_u(\mathbf{Z}_i^t, \varepsilon, \phi_u) = \begin{cases} M_u(\mathbf{Z}_i^t) & \phi_u \le \varepsilon \\ \mathbf{Z}_i^t & else \end{cases} \tag{18}$$

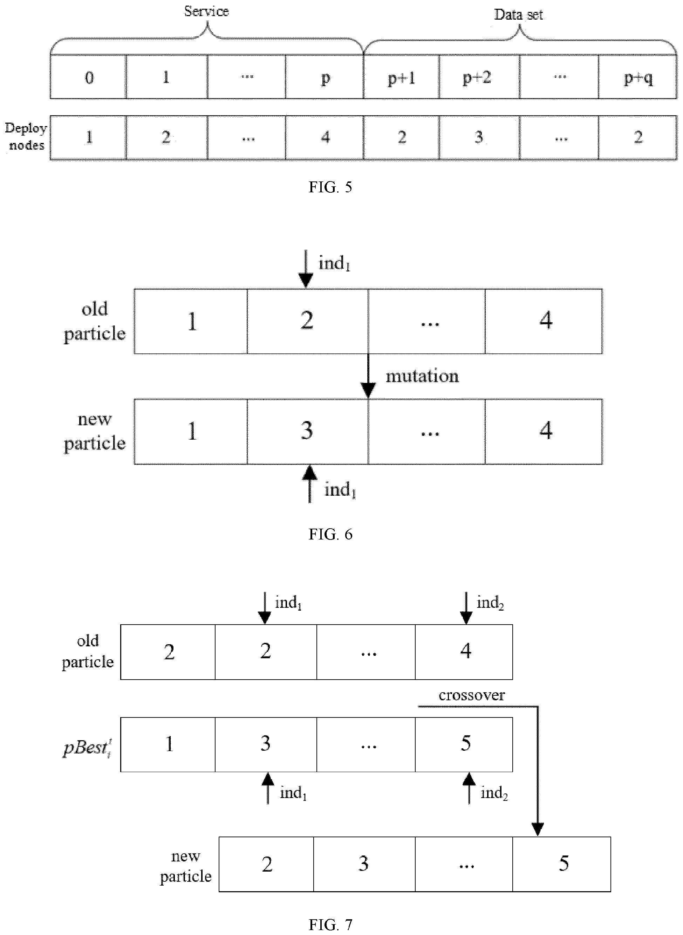

where $M_u()$ represents the mutation operator, and $\varepsilon$ represents the threshold when the mutation happens. When the random number $\phi_u$ is less than $\varepsilon$, the mutation operation is executed. First, an address indi in the particle is selected randomly, and then a computing node is selected randomly to replace the computing node mapped onto the original indi. FIG. 6 depicts the mutation operator, the address thereof is randomly selected as indi, the mapped computing node is changed from 2 to 3.

Property 2: the mutation operator can change the particle from being feasible to infeasible, vice versa.

Individual recognition and social recognition equations in the particle update are as follows:

$$Y_i^{t+1} = F_p(X_i^{t+1}, \mathbf{pBest}_i^t, \sigma_p, \phi_p) = \begin{cases} C_p(X_i^{t+1}, \mathbf{pBest}_i^t) & \phi_p \le \sigma_p \\ X_i^{t+1} & else \end{cases} \tag{19}$$

$$\mathbf{Z}_i^{t+1} = F_g(Y_i^{t+1}, \mathbf{gBest}^t, \sigma_g, \phi_g) = \begin{cases} C_p(Y_i^{t+1}, \mathbf{gBest}^t) & \phi_g \le \sigma_g \\ Y_i^{t+1} & else \end{cases} \tag{20}$$

where $C_p()$ represents the crossover operation, $\mathbf{pBest}_i^t$ represents the optimal historical particle of the $i^{th}$ individual in the $t^{th}$ iteration, $\mathbf{gBest}^t$ represents the optimal historical particle among all the particles in the $t^{th}$ iteration, and $\sigma_p$ ($\sigma_g$) represents a threshold of individual crossover. When the random number $\phi_p$ ($\phi_g$) is less than a threshold $\sigma_p$ ($\sigma_g$), the crossover operation is executed. FIG. 7 depicts an example of the crossover operation. First, addresses $ind_1$ and $ind_2$ in an old particle are randomly selected, and then the address in the old particle is replaced by the same address in $\mathbf{pBest}_i^t$ (or $\mathbf{gBest}^t$) to finally obtain a new particle.

Property 3: one particle subjected to the crossover operator can be changed from being infeasible to feasible, vice versa.

(4) Mapping from the particle to the unloading result

For one particle, it is needed to compute the execution time of each application and the total money overhead in the corresponding unloading solution. Therefore, the method provides an evaluation algorithm to map the particle to the unloading result. The thought of the evaluation algorithm is to compute an execution start time and an execution finish time of each program fragment by simulating the actual executive process of the program fragment, so as to compute the response time and the total money overhead of each of the application in the scheduling solution.

First, a variable *curTime* is set to represent the current time, initialized as 0. The input service and database unloading solutions are respectively *SP* and *DP*. A symbol $\lambda_i$ is used to represent the number of times when the application is currently executed, with an initial value being 1. Three attributes $\overset{\lambda_i}{AT}(s_i^{j,k})$, $\overset{\lambda_i}{FT}(s_i^{j,k})$, and $\overset{\lambda_i}{RET}(s_i^{j,k})$ are defined for each program fragment $s_i^{j,k}$, respectively representing a task arrival time of the executed fragment, a time when the fragment is executed, and a residual execution time of the fragment, and being initialized as follows:

$$
\begin{cases}
\overset{\lambda_i}{AT}(s_i^{j,k}) = \begin{cases} 0, & \text{if } j = 1, k = 1, \text{and } \lambda_i = 1 \\ None, & \text{else} \end{cases} \\
\overset{\lambda_i}{FT}(s_i^{j,k}) = None \\
\overset{\lambda_i}{RET}(s_i^{j,k}) = OT(s_i^{j,k})
\end{cases}
\tag{21}
$$

Then the response time and the money overhead when each application is executed can be computed through the equations (6) and (10) in 3.2.3. An algorithm 4 introduces major steps of the evaluation algorithm:

---

**Algorithm 4** The Deployment Scheme Evaluation

---

**Input:** The Deployment Scheme $BP$ and $SP$
The program segment flow charts $Flow = (D_i, S_i, P_i, Q_i)$

**Output:** The response time of each application $\overset{\lambda_i}{RT}(a_i)$
The total cost of the system $MC_{total}$

1: **Initialize** $curTime \leftarrow 0$, $\lambda_i \leftarrow 1$, $\overset{\lambda_i}{AT}(s_i^{j,k}) \leftarrow (0 \ or \ None)$, $\overset{\lambda_i}{FT}(s_i^{j,k}) \leftarrow 0$, $\overset{\lambda_i}{RET}(s_i^{j,k}) \leftarrow OT(s_i^{j,k})$, $slice \leftarrow \infty$
2: # Fill lanes.
3: **for each** $n_i \in N$ **do**
4:     **while** $n_i.empty > 0$ **do**
5:         **if** $\overset{\lambda_i}{AT}(s_i^{j,k}) \leq curTime$ **then**
6:             **add** $s_i^{j,k}$ **into** $n_i$
7:             $n_i.empty \leftarrow n_i.empty - 1$
8:         **end if**
9:     **end while**
10: **end for**
11: # Find the smallest time slice.
12: **for each** $n_i \in N$ **do**
13:     **for each** $s_i^{j,k}$ **in** $n_i$ **do**
14:         **if** $\overset{\lambda_i}{RET}(s_i^{j,k}) < slice$ **then**
15:             $slice \leftarrow \overset{\lambda_i}{RET}(s_i^{j,k})$
16:         **end if**
17:     **end for**
18: **end for**
19: # Calculate the remaining processing time of program fragments.
20: **for each** $n_i \in N$ **do**
21:     **for each** $s_i^{j,k}$ **in** $n_i$ **do**
22:         $\overset{\lambda_i}{RET}(s_i^{j,k}) \leftarrow \overset{\lambda_i}{RET}(s_i^{j,k}) - slice$
23:         **if** $\overset{\lambda_i}{RET}(s_i^{j,k}) = 0$ **then**
24:             $\overset{\lambda_i}{FT}(s_i^{j,k}) \leftarrow curTime$
25:             $n_i.empty \leftarrow n_i.empty + 1$
26:         **end if**
27:         # Gets the next program fragment to execute.
28:         **if** $s_i^{j,k}$ **is the last fragment of** $P_i$ **and** $\lambda_i < \xi_i$ **then**
29:             $\lambda_i \leftarrow \lambda_i + 1$, $\overset{\lambda_i}{AT}(s_i^{1,1}) \leftarrow \max((\lambda_i - 1) \cdot \mu_i, curTime)$
30:         **else if** $s_i^{j,k}$ **is not the last fragment of** $P_i$ **then**
31:             $\overset{\lambda_i}{AT}(s_i^{x,y}) \leftarrow curTime + IT(s_i^{x,y})$
32:         **end if**
33:     **end for**
34: **end for**
35: **for each** $a_i \in A$ **do**
36:     **if** $\lambda_i < \xi_i$ **then**
37:         **goto line 3**
38:     **end if**
39: **end for**
40: **Calculation** $\overset{\lambda_i}{RT}(a_i)$ **and** $MC(a_i)$ **according to Eq. (6) and (10)**

---

The algorithm 4, by taking the unloading solution and the application flowcharts as the inputs, finally obtains the execution time of each application and the total money overhead of the system, including the following specific steps:

S1 (the 2nd-10th lines): filling channels: adding each program fragment onto the computing node in sequence according to the unloading solution till there is no null channel on the computing node ($n_i$.empty is used to represent the residual channel number of the node $n_i$, with the initial value thereof being $\omega_i$), where the program fragments put into the channels need to satisfy the condition that the task to execute the program fragment has arrived the computing node at the current time, i.e., $\overset{\lambda_i}{AT}(s_i^{j,k}) < curTime$;

S2 (the 12th-18th lines): searching for the minimum timeslice: first, traversing the program fragments being executed on each computing node to find out the shortest residual execution time $\overset{\lambda_i}{RET}(s_i^{j,k})$, and assigning the shortest residual execution time to a timeslice *slice*; and then adding the current time *curTime* with *slice* to represent a time with a duration of *slice*;

S3 (the 20th-34th lines): computing a residual time of the program fragment: subtracting the timeslice *slice* from the residual time $\overset{\lambda_i}{RET}(s_i^{j,k})$ of the program fragment being executed to represent a time during a duration *slice* being executed; when the residual time $\overset{\lambda_i}{RET}(s_i^{j,k})$ is 0, it represents that the program fragment has been executed completely, and a finish time $\overset{\lambda_i}{FT}(s_i^{j,k})$ is set to be *curTime*; then removing the fragment from the channel, and adding 1 into an idle channel number $n_i$.empty of the node; if it is not the last fragment, taking out the program fragment $s_i^{x,y}$ to be executed from $P_i$, where a time $\overset{\lambda_i}{AT}(s_i^{x,y})$ of task arrival is the sum of *curTime* and a data importing time $IT(s_i^{x,y})$; if the program fragment is the last fragment of $P_i$ and the current execution times are smaller than the total execution times" it indicates that the application is executed completely to enter a next execution; $\overset{\lambda_i}{AT}(s_i^{1,1})$ of the first program fragment executed next time is the maximum value of an ideal triggering time and the current time; and

repeating the above steps until each application $a_i$ has been executed for $\xi_i$ times, and finally, calculating the response time $\overset{\lambda_i}{RT}(a_i)$ and the money overhead $MC(a_i)$ of each application executed through the equations (6) and (10).

(5) Parameter setting

The inertia weight $\varepsilon$ may greatly affects the search ability and the astringency of the PSO algorithm. The greater the value of $\varepsilon$ is, the stronger the global search ability is. The less the value of $\varepsilon$ is, the stronger the local search ability is. A typical inertia weight adjustment method is as follows:

$$\varepsilon = \varepsilon_{\max} - iters_{cur} \cdot \frac{\varepsilon_{\max} - \varepsilon_{\min}}{iters_{\max}} \qquad (22)$$

where $\varepsilon_{\max}$ and $\varepsilon_{\min}$ respectively represent the maximum value and the minimum value of the initialized $\varepsilon$, and $iters_{cur}$ and $iters_{\max}$ respectively represent the number of iterations of current algorithm and the maximum number of iterations initialized.

Change of $\varepsilon$ in the classical update strategy is related to the number of iterations, which cannot fit a nonlinear characteristic of the minimum money overhead under multiple tasks well. Therefore, the method designs an adaptively adjusted discrete adjustment method based on advantages and disadvantages of the current swarm particles to adjust the inertia weight $\varepsilon$, shown as follows:

$$\varepsilon = \varepsilon_{\max} - (\varepsilon_{\max} - \varepsilon_{\min}) \cdot \exp(\frac{d(\boldsymbol{Z}_i^{t-1})}{d(\boldsymbol{Z}_i^{t-1}) - 1.01}) \quad (23)$$

$$d(\boldsymbol{Z}_i^{t-1}) = \frac{div(\boldsymbol{Z}_i^{t-1}, gBest^{t-1})}{p+q} = \frac{\sum_{j=1}^{p+q} \tau_j}{p+q} \quad (24)$$

where $d(\boldsymbol{Z}_i^{t-1})$ represents a difference between the $i^{th}$ particle $\boldsymbol{Z}_i^{t-1}$ iterated currently for the $(t-1)^{th}$ time and the globally optimal solution **gBest**$^{t-1}$ iterated for the $(t-1)^{th}$ time; $\tau_j$ is a statistical factor; when the value $\tau_j$ is 1, it represents that the computing nodes mapped by $\boldsymbol{Z}_i^{t-1}$ and **gBest**$^{t-1}$ on the $j^{th}$ code are the same, and otherwise, the value is 0. Therefore, a search capability of the algorithm can be adaptively adjusted according to the difference between the current particle and the globally optimal particle.

In addition, the two recognition factors $\sigma_p$ and $\sigma_g$ of the algorithm are set [24] by adopting a linear increase and decrease strategy, similar to the equation (22). $\sigma_p^{star}$ and $\sigma_g^{star}$ respectively represent iterated initial values of parameters $\sigma_p$ and $\sigma_g$, and $\sigma_p^{end}$ and $\sigma_g^{end}$ respectively represent iterated final values of the parameters $\sigma_p$ and $\sigma_g$.

(6) MPSO-GA flow

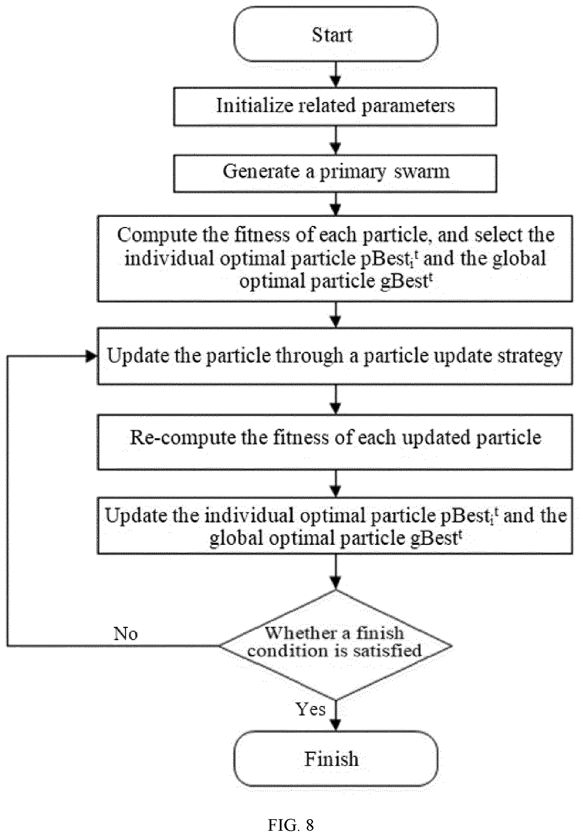

FIG. 8 depicts a flowchart of the mentioned MPSO-GA, an implementation process thereof including the following steps:

S1: initializing related parameters of the MPSO-GA, including an initial swarm size $\delta$, a maximum iteration number of times $iters_{\max}$, a maximum inertia weight $\varepsilon_{\max}$, a minimum inertia weight $\varepsilon_{\min}$, an initial value and a finish value $\sigma_p^{star}$ $\sigma_g^{star}$ $\sigma_p^{end}$ and $\sigma_g^{end}$ of the acceleration coefficient; and then randomly generating an initial total;

S2: computing the fitness of each particle according to the equation (14)-(16): selecting the optimal solution of each particle itself, and selecting the particle with the optimal fitness as the globally optimal solution in the current generation;

S3: updating each particle according to the equation (13), and re-computing the fitness of each particle;

S4: updating the optimal individual particle of each particle; where if there is a solution better than an original particle, updating the globally optimal particle; and

S5: if an iteration stopping condition is satisfied, finishing the algorithm; and otherwise, returning to S3 for continuous iteration.

### 4 Evaluation of the method

In this part, we evaluate the method from two aspects. On the one hand, the validity of the method (section 4.1) is verified by an experiment in an actual scenario. On the other hand, the superiority (section 4.2) of the MPSO-GA in solving the multi-task and multi-server unloading problem is verified through a lot of simulation experiments.

### 4.1 Validity verification

To verify the validity of the method, experiments are carried in a real scenario according to the following research questions (RQ).

RQ1 How about the effect of the method in improving the performance of the application? (Section 4.1.2)

RQ2 Whether the extra execution overhead generated by method is within an acceptable range? (Section 4.1.3)

**4.1.1 Experiment settings**

(1) Application: we have achieved three real world applications of the program structure mentioned herein, including a license plate recognition application (hereinafter referred to as LPRA), a target detection application (hereinafter referred to as TDA), and a human face recognition application (hereinafter referred to as FRA). In addition, the LPRA is an Android application, TDA and FRA are DNN-based applications, and the source codes can be found in our GitHub project 1.

Table 1: Contexts of the IoT equipment in different scenarios

|  | Scenario 1 | Scenario 2 | Scenario 3 |
|---|---|---|---|
| E1 | - | V=1.0 MB/S RTT=70ms | V=1.5 MB/S RTT=40ms |
| E2 | - | - | V=1.0MB/S RTT=70ms |
| C1 | V=0.6 MB /S RTT= 100ms | V=0.6 MB /S RTT= 100ms | V=0.6 MB /S RTT= 100ms |

(2) Network environment: the network environment includes four computing nodes: one IoT equipment (D1) and three remote servers (E1, E2, and C1). As shown in Table 1, we have designed three network scenarios, where the scenario 1 is only connected to the C1, the scenario 2 is connected to the E1 and C1, and the scenario 3 is connected to all the remote servers. Each element in Table 3 represents the data transmission rate v and the minimum link delay rtt, and less rtt and greater v represent a better message capacity. We use a network simulation tool Dummynet to control an available bandwidth.

(3) Equipment: we use workstations to simulate the edge servers (E1 and E2) and the cloud server (C1), where the E1 is equipped with 2.5 GHz, a 2-core CPU, and a 4GB RAM, the E2 is equipped with 3.0 GHz, a 4-core CPU, and a 8GB RAM, and the C1 is equipped with 3.9 GHz, a 8-core CPU, and a 16GB RAM. In addition, we also use two low-performance equipment as the IoT equipment (D1): Huawei Honor MYA-AL10 (1.4 GHz, 4-core CPU, 2 GB RAM) and Raspberry Pi Pi 3 B+ (1.4 GHz, 4-core CPU, 1 GB RAM). The LPRA runs on the MYA-AL10. The TDA and FRA run on the Raspberry Pi Pi 3 B+.

(3) To measure the validity of the method, we have discussed three different states of the application: (i) the original application (hereinafter referred as to OA) which cannot support computing unloading is only executed on the IoT equipment. (ii) The reconstructed application is locally executed on the IoT equipment (hereinafter referred as to RAL), and the equipment has been reconstructed from the OAto satisfy the program structure mentioned herein. (iii) The re-configured application (hereinafter referred as to RAO) is unloaded according to the unloading solution generated by the MPSO-GA, and the unloading solution can use the peripheral servers. On the basis of a rigorous principle, we have repeated the process 20 times to avoid unnecessary mistakes.

**4.1.2 RQ1: Performance improvements caused by the method**

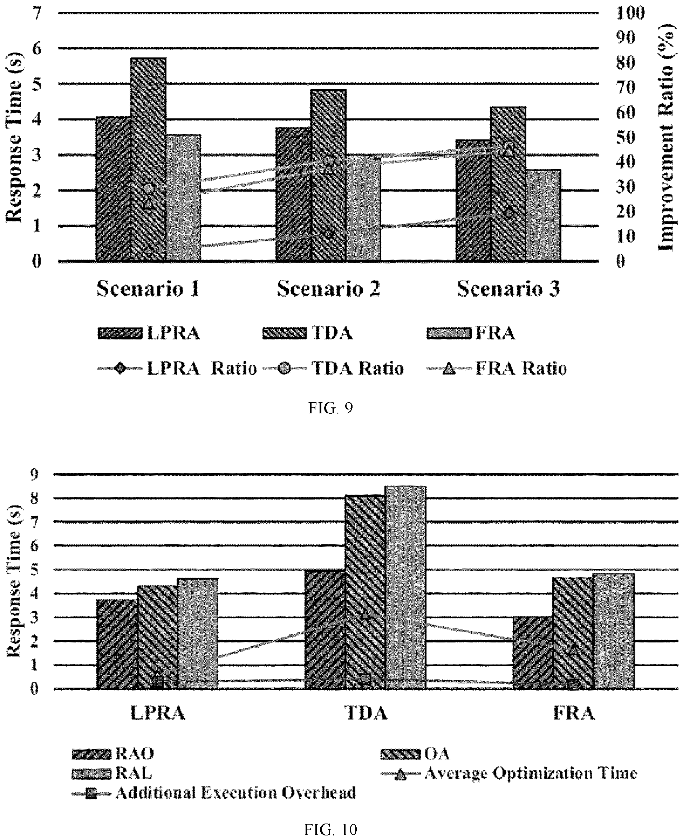

To measure the performance improvements of the method, we have executed the reconstructed applications (including LPRA, TAD, and FRA) in three different scenarios according to the unloading solution obtained by the MPSO-GA, and the experimental results are shown in FIG. 9.

According to the results, compared with the OA, the response times of the applications after computing unloading are shortened effectively, where the LPRA shortens the time by 3.97-19.38%, the TDA shortens the time by 29.3-46.27%, and the FRA shortens the time by 23.4844.64%. To execute a neural network model usually needs a huge computing capacity. Therefore, to unload the computing intensive tasks to servers with high performance may lead to excellent performance improvements. The LPRA is a k mean value-based license plate recognition application. To balance the data transmission time and the execution time of the tasks in the LPRA, most tasks in the LPRA are more suitably executed locally, particularly in a poor network environment. Therefore, computing unloading brings non-significant performance improvements to the LPRA.

At the same time, in different network environments, the performance improvements of the application are different. In the scenario 3, the peripheral network resources are more abundant and high in communication capacity, so that the performance improvements are obviously superior to those in other conditions. In the scenario 1 only connected to the cloud server, most tasks are still locally executed, so that the performance can only be improved by 3.97-29.3%.

Generally speaking, the method can provide different scenarios and applications with the performance improvements to a certain extent.

**4.1.3 RQ2 The extra execution overhead generated by method**

Compared with the original application, the structure mentioned herein generates the extra execution overhead which includes the following three major parts: (1) external variables or results needed to be packaged before and after invoking the service; (2) the invoked service or database needed to be judged by the controller (the Invoke or Call function) to execute; and (3) communication and response time generated by interaction between the controller and the service or database. To measure the extra overhead, OA of different types of applications is used as a basis.

The difference between RAL and OA represents the extra overhead of the method. The difference between RAO and OA represents the performance improvement effect, where RAO takes the mean response time in different scenarios of RQ1. The experimental results are shown in FIG. 10.

Viewed from the experimental results, the TDA and LPRA generate more extra overhead in the execution process. In comparison, the overhead of the FRA can be ignored. An important reason for this result is that compared with the TDA and TPRA, the FRA is of a simpler structure and includes fewer services and databases. The extra overhead for unloading is mainly generated when the services or databases are invoked. The more the services or databases included in the application are, the more the extra overhead needed is.

In addition, by comparing two broken lines in FIG. 10, we can see that compared with the mean optimization time gain for computing unloading, the extra execution overhead can be ignored, particularly for the application with more complicated tasks.

Generally speaking, the extra execution overhead generated by method is within the acceptable range.

**4.2 Superiority verification**

To verify the superiority of the MPSO-GA, wide simulation experiments are carried out to solve the following research questions (RQ):

RQ3: whether the MPSO-GA can obtain the optimal unloading solution in a simple network environment where different applications are independently executed?

RQ4: whether the MPSO-GA can obtain the optimal unloading solution in a more complicated network environment where different applications scramble for resources in the execution process?

It is worth noting that parameter initialization in the MPSO-GA in the experiment is simulated , where $\delta$=100, iters$_{max}$=1000, $\varepsilon_{max}$=0.8, $\varepsilon_{min}$=0.2, $\sigma_p^{star}=0.9$, $\sigma_p^{end}=0.2$, $\sigma_g^{star}=0.4$, and $\sigma_g^{end}=0.9$ .

**4.2.1 Experiment settings**

(1) application: the same with the section 4.1, the application type includes LPRA, TDA, and FRA. In a literature, it is usually assumed that the task execution time and the allocated computing resource quantity are in a linear relationship, and the relationship between the data transmission time and the network communication capacity is the same. Therefore, by collecting the execution times and the data transmission times on different performance equipment, the computing workloads and the data transmission amplitudes of different program fragments in the application are obtained in advance, and then they are computed by least square linear regression. In addition, each type of application needs to appoint a deadline constraint to check whether the unloading solution is feasible. The deadline limit is set below.

$$dl_1 = \{3.1, 3.4, 3.8, 4.2\} \quad dl_2 = \{4, 5.1, 6.3, 7.6\} \quad dl_3 = \{2.6, 3, 3.5, 4.2\}$$

$dl_1$, $dl_2$, and $dl_3$ are respectively deadlines of plate license recognition, target detection and human face recognition. The smaller the value is, the stricter the time constraint is.

Table 2 Related configurations of the equipment

| Server | Type | Computing capacity | Core number | Overhead | Application | Execution frequency |
|---|---|---|---|---|---|---|
| $n_1$, $n_2$, $n_3$ | 0 | 1.4 | 1 | 0 | LPRA | {90s,60s,30s} |
| $n_4$, $n_5$, $n_6$ | 0 | 1.4 | 1 | 0 | TDA | {30s,20s,10s} |
| $n_7$, $n_8$, $n_9$ | 0 | 1.4 | 1 | 0 | FRA | {60s,40s,20s} |

(continued)

| Server | Type | Computing capacity | Core number | Overhead | Application | Execution frequency |
|---|---|---|---|---|---|---|
| $n_{10}$, $n_{11}$, $n_{12}$ | 1 | 2.5 | 2 | 2 | | |
| $n_{13}$, $n_{14}$, $n_{15}$ | 2 | 3 | 4 | 3 | | |
| $n_{16}$ | 3 | 3.9 | 8 | 5 | | |

Table 3 Network connection condition

| Server type | Bandwidth | Minimum link delay | Overhead |
|---|---|---|---|
| $0 \leftrightarrow 1$ | 1.5 MB/S | 40ms | 1.2 |
| $0 \leftrightarrow 2$ | 1.0 MB/S | 70ms | 0.6 |
| $1 \leftrightarrow 2$ | 3.0 MB/S | 10ms | 0.4 |
| $0/1/2 \leftrightarrow 3$ | 0.6 MB/S | 100ms | 0.08 |

(2) Network environment: in this part, we have designed an application scenario, as shown in FIG. 10. A cloud edge environment in the scenario totally includes 9 IoT equipment ($n_1$-$n_9$), 6 edge servers ($n_{10}$-$n_{15}$), and 1 cloud server ($n_{16}$). Configurations, overheads and execution application conditions of different types of equipment are specifically shown in Table 2. The application only triggers exaction on the IoT equipment. The execution frequency in Table 2 represents that different applications will be executed automatically at set intervals. Each IoT equipment is connected to two adjacent edge servers, the adjacent edge servers are interconnected, and all the IoT equipment and edge servers are connected to the cloud server, as shown in FIG. 10. Specific network conditions and overheads among different types of computing nodes are shown in Table 2.

(3) Contrast algorithm: to compare and evaluate the performance of the MPSO-GA in the MEC environment, the following three methods are introduced: (i) the conventional PSO cannot be directly used in the discrete problem herein, so that the discrete problem is converted into the continuous problem by way of taking a remainder, and the fitness function is the same as that of PSOGA; (ii) GA uses a binary problem coding method, the dimensionality thereof being equal to the number of the servers, and the fitness function thereof being the same as that in the PSOGA; and (iii) Idea: the optimal solution in the experimental process is kept to approach the real optimal solution as far as possible. In the experiment, the unloading results of same configuration may be different. Therefore, through 30 times of repeated experiments, the mean value of the feasible solution therein is taken to measure the system overhead.

### 4.2.2 RQ3: Independent execution condition of the application in different deadline constraints

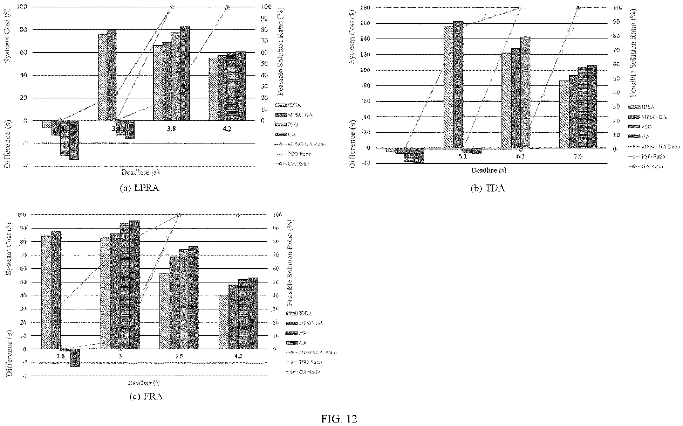

To make sure that the applications will not scramble for resources, the different types of applications are respectively executed in different time periods. It is assumed that in a time period of 0-180s, the plate license recognition application is executed at n1, n2, and n3; in a time period of 180-240s, the target detection application is executed at n4, n5, and n6; and in a time period of 240-360s, the human face recognition application is executed at n7, n8, and n9. The experimental results of the different types of applications in the different deadline constraints respectively correspond to FIGS. 12(a), 12(b), and 12(c). The positive axis in the figure represents the system overhead of the feasible solution in the solution, and the negative axis represents the sum of the differences between the response times and the time constraints of the applications in the solution when there is no feasible solution. The folded line represents the rate of generating the feasible solution by the algorithm in 30 times of repeated experiments.

Viewed from the experimental results, by using the MPSO-GA, PSO and GA, the system overhead is reduced with widening of the deadline. This is because that the strategy based a meta-heuristic algorithm tends to assign more tasks to the servers with low overhead when the deadline is not strict. It can be seen from FIGS. 12(a) and 12(b) that when the deadline is the strictest, there may be a condition that the feasible solution cannot be found. The results further show that the system overheads of the different types of application are different. The reason is that the applications include different services among which various data is transmitted. For example, the TDA includes more complicated services. To arrive at the deadline, most tasks have to be unloaded to the servers with high performance, so that more computing overheads are needed.

Viewed either from the saving of the system overhead, the deadline difference or the proportion of the feasible solution, the effect obtained by the MPSO-GA is superior to that of PSO and GA because the MPSO-GA can adaptively adjust the search capability according to current condition and perform iterative evolution from the global angle. The PSO algorithm has the problems of poor local search capability and low search precision, which is difficult to search for the optimal solution. The performance of the GA is greatly affected by the deadline constraint because the search range thereof is local during each iteration. Generally speaking, compared with the PSO and GA, the system overheads of the MPSO-GA are respectively saved by about 3.95%-11.56% and 2.11%-17.51%.

**4.2.3 RQ4: Simultaneous execution condition of the applications in different deadline constraints**

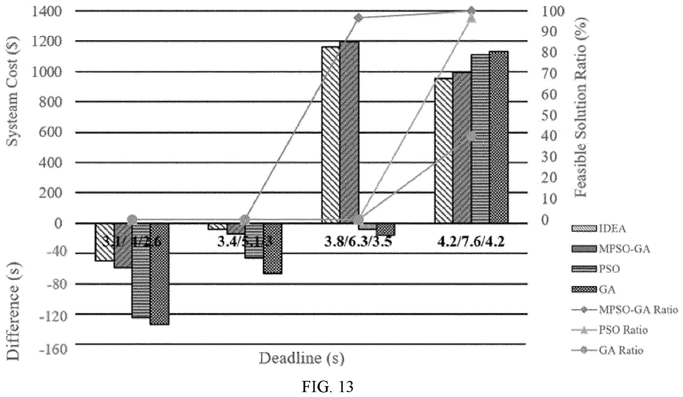

To research the decision-making effect of the PSOGA in the more complicated network environment, the applications of the IoT equipment n1-n9 are triggered simultaneously at a time 0s and are executed for 360s. The experimental results are shown in FIG. 13:
viewed from the experimental results, the three algorithms cannot obtain the feasible solution in the two stricter time constraint conditions. Moreover, the PSO and GA have the feasible solution only in the loosest time constraint. Different from RQ3, different applications scramble for resources in the execution process, so that the response times of some applications cannot satisfy the deadline. Therefore, regardless of the second strict time constraint, there is no feasible solution. However, it can be found by comparison that the solution generated in the two conditions by the MPSO-GA can make the response time of the overall application be closer to the time constraint.

At the same time, with increase of the quantity of the applications, the quantities of the services and databases needed to be determined are increased, and the size of the problem space increases exponentially. Therefore, the difficulty to obtain an appropriate unloading solution by the algorithm is greatly increased. In spite of this, the MPSO-GA is still capable to obtain the feasible solution in the third strict time constraint.

The method is capable to support the computing unloading of various applications in the MEC and multi-task and multi-server unloading decision making. The experimental results show that the method can significantly improve the performance of the application in different scenarios, and the extra execution overhead is acceptable. Besides, by simulating the comparison experiment, it is verified that the method has more opportunities to obtain the feasible solution in the stricter time constraint condition; and moreover, in the looser time constraint condition, the overhead of the obtained feasible solution is minimum.

The above is merely preferred embodiments of the present invention and is not limitation to the present invention in other forms. Those skilled in the art may alter or modify equivalent embodiments with equivalent changes by means of the disclosed technical content. Any subtle modifications, equivalent changes and modifications made on the embodiments in accordance with the technical substance of the present invention shall come within the scope of the technical scheme of the present invention without departing the content of the technical scheme of the present invention.

**Claims**

1. A method for supporting adaptive unloading of multi-Internet of Things (IoT) applications in an edge environment, **characterized by** comprising the following steps:

   constructing an application compliant with a universal program structure supporting on-demand computing unloading;
   for the application compliant with the universal program structure supporting on-demand computing unloading, extracting a program fragment flowchart through static code analysis to provide internal flow information of the application for generation of an unloading solution;
   analyzing a peripheral mobile edge computing (MEC) environment and the application through an unloading solution generating algorithm based on a multi-task particle swarm optimization-genetic algorithm (MPSO-GA) to obtain the optimal unloading solution; and
   performing, by the application, computing unloading by taking a service as a particle size according to the unloading solution to minimize a system overhead under a circumstance that a deadline constraint of each application is satisfied.

2. The method for supporting adaptive unloading of multi-Internet of Things (IoT) applications in the edge environment according to claim 1, **characterized in that** the universal program structure supporting on-demand computing unloading is designed through a design mode supporting independent deployment and execution of modules of the different types of applications; the design mode satisfies the following conditions: each module of the application is capable to be independently deployed and executed at different computing nodes; the module is capable to determine a computing node where a module or a database to be invoked is located, so as to guarantee invoking validity; the invoked module is capable to receive an input of an invoking module and return a correct executive result;

there are two types of services in the application compliant with the design mode: a pure service, using local data without invoking other services; a compound service, relying on data from other services and required to invoke other services; the compound service mainly comprises the following attributes:

(1) key-value type data Params/result: all external variables required by an invoked service in an execution process are imported through Params, i.e., there is no sentence accessing to the external variables in the service; when the service needs to modify the external variables, the external variables are exported by virtue of result; and the external variables refer to variables accessed in the execution process of the service and defined outside the service;

(2) a character string seq: a character string seq is maintained in the application, and an invoke path from a current service to a primary service is recorded; and, to maintain the seq, when the service is invoked, the seq is imported in the form of parameter, and a name of the invoked service is added into the seq;

(3) an Invoke function: the compound service invokes other services through the Invoke function; the Invoke function achieves two functions: a) the Invoke function controls forwarding: whether the service is locally executed or remotely invoked is determined, and if the service is remotely invoked, which computing node invoking the service is determined; and b) data transmission: all parameters required by the invoked service are serialized, and the returned service executive result is deserialized; and

(4) a Call function: the service establishes a connection with the database through the Call function; the Call function determines an address of the database through a name of the database to be interacted and returns a connecting channel for data transmission with the database, so as to ensure normal data interaction between the service and the database.

**3.** The method for supporting adaptive unloading of multi-Internet of Things (IoT) applications in the edge environment according to claim 2, **characterized in that** an implementation method for the Invoke function comprises the following steps:

first, determining an invoke path from a service to be invoked to the primary service through the seq and serviceName, and determining an address where the service is executed in a configuration file SP according to the invoke path, wherein the SP stores deployment addresses of different services, and if the address is equal to Local and the Local represents the computing node when the service is invoked, the service is locally executed directly through a local function, and a result is returned; and if the address is not equal to the Local, service$_i$, Parameter$_i$, and seq are sent through a remote function to an agent program on a remote node, and a remote agent invokes the service$_i$ through a reflection mechanism and finally returns a result.

**4.** The method for supporting adaptive unloading of multi-Internet of Things (IoT) applications in the edge environment according to claim 2, **characterized in that** an implementation method for the Call function comprises the following steps:

first, determining a deployment address host of the database from a configuration file DP, wherein the DP stores the deployment addresses of different databases according to DatabaseName$_i$; then acquiring corresponding users and passwords from Accounts recording the database names and passwords through the host and database; and finally, establishing a data transmission channel, and returning the channel.

**5.** The method for supporting adaptive unloading of multi-Internet of Things (IoT) applications in the edge environment according to claim 2, **characterized in that** the method for extracting a program fragment flowchart through static code analysis comprises the following steps:

first, determining an unloaded content, i.e., a quantity of the services and databases in the application, the databases being uniquely identified by names, and the services being uniquely identified by the invoking paths from the services to the primary service; then, evaluating the unloading solution, further dividing each of the services into program fragments and recording an execution sequence of the fragments; and finally, modeling the application as the program fragment flowchart;

the program fragment flowchart of the ith application is represented by a symbol $Flow_i = (D_i, S_i, P_i, Q_i)$; where

$$D_i = \left\{ d_i^1, d_i^2, ..., d_i^I \right\}$$ represents a set of the databases in the application, and $d_i^j.Name$ is used to represent a name of the database $d_i^j$; $S_i = \left\{ s_i^1, s_i^2, ..., s_i^o \right\}$ represents a set of the services in the application, and $s_i^j.Name$ is used to represent a name of the service $s_i^j$, $s_i^j.callSeq$ represents an invoking path from the service $s_i^j$ to the primary service $s_i^1$, and $s_i^j.Time$ represents the total number of times that the service $s_i^j$ is invoked; in the presence of service invoking, each of the services is segmented into a plurality of serial code fragments in an actual executive process, i.e., $s_i^j = \left\{ s_i^{j,1}, s_i^{j,2}, \ldots, s_i^{j,f} \right\}$; $P_i$ is a set recording a sequence in which the actual program fragments are executed, and the program fragments in the set can be repeated; the sequence in which the program fragments are added into the set is the actual execution sequence thereof in the application, and for two adjacent fragments, the previous fragment is called as a precursor fragment of a next fragment; $Q_i$ represents a set recording correlations between the program fragments and the databases, where $(s_i^{j,k}, d_i^h) \in Q_i$ represents that there is an interaction between $s_i^{j,k}$ in the executive process and the database $d_i^h$;

each of the code fragments is defined as a triad $s_i^{j,k} = \left\langle \alpha_i^{j,k}, \beta_i^{j,k}, \gamma\left(s_i^{j,k}, d_i^h\right) \right\rangle$, where $\alpha_i^{j,k}$ represents a size of data imported into a fragment $s_i^{j,k}$; $\beta_i^{j,k}$ represents a task load of a fragment $s_i^{j,k}$; and $\gamma\left(s_i^{j,k}, d_i^h\right)$ represents a total size of data of a fragment $s_i^{j,k}$ in the executive process and a database $d_i^h$ interacting with each other, and if there is no interaction, it is set to be 0;

the addresses of the Invoke function and the Call function in source codes are analyzed by a static code analysis technology to obtain a program fragment flowchart $Flow_i = (D_i, S_i, P_i, Q_i)$ of the application i; and by taking the source codes of the ith application and the service name of the primary service as inputs, constructing the corresponding program fragment flowchart comprises the following steps:

first, assigning information of the primary service to $s_i^1$, and executing a corresponding sentence set $U_i^1$ through $s_i^1.Name$; then, adding the primary service $s_i^1$ into a null set $S_i$, and setting $D_i$, $P_i$, and $Q_i$ to be null; and finally, invoking a getFlow() function to construct the program fragment flowchart in a recursive fashion;

wherein the getFlow() function takes $s_i^a$ and $U_i^a$ as inputs of the function, respectively representing the currently analyzed service and the sentence set corresponding to the service; pId is used to record the number of the current program fragment, the initial number is set to be 1, and the current program fragment $s_i^{a,pId}$ is added into $s_i^a$ and $P_i$; each sentence in the sentence set is operated as follows: acquiring a keyword in a sentence $u_i^{a,j}$; if the keyword comprises a keyword "invoke", judging whether the invoked service has appeared previously through the invoking path callSeq; if the invoked service has appeared previously, adding 1 to the invoking number of times, and if the invoked service has not appeared previously, adding $S_i$, and obtaining the corresponding sentence set through the service name; updating the pId, and adding a currently new program fragment $s_i^{a,pId}$ into $s_i^a$ and $P_i$; performing getFlow () recursion on the service $s_i^b$; if the keyword in the sentence $u_i^{a,j}$ comprises a keyword "call", judging whether the database $d_i^k$ has been in the set $D_i$ already first in a similar way, and if the database has not been in the set, adding the database; and then judging whether $\left(s_i^{a,pId}, d_i^h\right)$ is in the set $Q_i$, if not, adding it into the set.

6. The method for supporting adaptive unloading of multi-Internet of Things (IoT) applications in the edge environment according to claim 1, **characterized in that** the unloading solution generating algorithm describes an application unloading problem in the MEC environment from the aspects of a network model, an application model, and a performance model, and solves the application unloading problem through the multi-task particle swarm optimization-genetic algorithm (MPSO-GA);

a network environment comprises a cloud server CS, a plurality of edge servers ES, and a plurality of Internet of things devices DS; the MEC environment is modeled as a map $G = (N, E)$ including a set $N = \{n_1, n_2, ..., n_w\}$ of the computing nodes, and a set $E$ is used to represent a sub connection thereamong; the computing nodes are represented by $n_i = <\psi_i, \omega_i, c_i^{com}>$, where $\psi_i$ represents computing power of the computing node $n_i$; it is assumed that a storage capacity of each node is capable to satisfy a corresponding demand; $\omega_i$ represents the maximum number of tasks capable of being executed by the node $n_i$, wherein the value thereof is equal to a nuclear number of the node; $c_i^{com}$ represents a computing cost by using the computing node $n_i$ per second; $e_{i,j}$ is used to represent a connection between $n_i$ and $n_j$, and is related to a bandwidth $v_{i,j}$ and the minimum link delay $rtt_{i,j}$, and $c_{i,j}^{tran}$ is used to represent a transmission overhead per second between the nodes $n_i$ and $n_j$; it is assumed that there is a system going to be executed for a time $\theta$ in the unloading process; there are a plurality of applications $A = \{a_1, a_2, ..., a_g\}$ from IoT equipment in the system and the applications $a_i$ are executed at a time interval of $\mu_i$, so each application is executed for $\xi_i = \theta / \mu_i$ times within a time period $\theta$, and $dl_i$ is used to represent a deadline of the application $a_i$; wherein each application is compliant with the universal program structure; and the application is modeled as the program fragment flowchart $Flow_i = (D_i, S_i, P_i, Q_i)$;

to compute a response time and a money overhead of the application, an unloading solution corresponding to the service and database is constructed, where $SP_i = \{sp(s_i^1), sp(s_i^2), ..., sp(s_i^o)\}$ represents a deployment address of the service in the application $a_i$; for each program fragment $s_i^{j,k}$, the executive address thereof is dependent on the deployment address of the service $s_i^j$, i.e., $sp(s_i^{j,k}) = sp(s_i^j)$; and $DP_i = \{dp(b_i^1), dp(b_i^2), ..., dp(b_i^l)\}$ represents a deployment address of the database in the application $a_i$;

in the $\lambda_i$th executive process of the application $a_i$, $\overset{\lambda_i}{AT}(s_i^{j,k})$ is used to represent a time when a task executing the program fragment $s_i^{j,k}$ arrives at the computing node; a time when the fragment is actually executed is presented as $\overset{\lambda_i}{ST}(s_i^{j,k})$; $\overset{\lambda_i}{WT}(s_i^{j,k})$ represents a queuing time of the fragment on the node, wherein:

$$\overset{\lambda_i}{WT}(s_i^{j,k}) = \overset{\lambda_i}{ST}(s_i^{j,k}) - \overset{\lambda_i}{AT}(s_i^{j,k}) \qquad (1)$$

a data importing time when the precursor fragment $s_i^{x,y}$ transfers the data to the program fragment $s_i^{j,k}$ is as follows:

$$IT(s_i^{j,k}) = \frac{\alpha_i^{j,k}}{v_{sp(s_i^{x,y}), sp(s_i^{j,k})}} + rtt_{sp(s_i^{x,y}), sp(s_i^{j,k})} \qquad (2)$$

a time $OT(s_i^{j,k})$ when the program fragment $s_i^{j,k}$ occupies the node $sp(s_i^{j,k})$ comprises a self-task execution time $ET(s_i^{j,k})$ and a data transmission time $DT(s_i^{j,k}, d_i^h)$ between different databases during execution, where $OT(s_i^{j,k})$ is computed as follows:

$$OT(s_i^{j,k}) = ET(s_i^{j,k}) + \sum\nolimits_{h=1}^{l} DT(s_i^{j,k}, d_i^h) \qquad (3)$$

$$= \frac{\beta_i^{j,k}}{\psi_{sp(s_i^{j,k})}} + \sum\nolimits_{h=1}^{l} \frac{\gamma\left(s_i^{j,k}, d_i^h\right)}{v_{dp(d_i^h),sp(s_i^{j,k})}} + rtt_{dp(d_i^h),sp(s_i^{j,k})} \qquad (4)$$

a finish time $\overset{x}{FT}(s_i^{j,k})$ of $s_i^{j,k}$ is the sum of a start time and an occupied time on the node $sp(s_i^{j,k})$, computed as follows:

$$\overset{\lambda_i}{FT}(s_i^{j,k}) = \overset{\lambda_i}{ST}(s_i^{j,k}) + OT(s_i^{j,k}) \qquad (5)$$

a start time when the application $a_i$ is executed for the $\lambda_i^{th}$ time is a task arrival time $\overset{\lambda_i}{AT}(s_i^{1,1})$ of the first program fragment $s_i^{1,1}$ executing the primary service, and the finish time is a time $\overset{\lambda_i}{FT}(s_i^{1,f})$ when the last fragment $s_i^{1,f}$ of the primary service is executed, wherein the response time $\overset{\lambda_i}{RT}(a_i)$ when the application $a_i$ is executed for the $\lambda_i^{th}$ time is computed as follows:

$$\overset{\lambda_i}{RT}(a_i) = \overset{\lambda_i}{FT}(s_i^{1,f}) - \overset{\lambda_i}{AT}(s_i^{1,1}) \qquad (6)$$

when the computing node $sp(s_i^{j,k})$ is executed, a using overhead of the program fragment $s_i^{j,k}$ occupying the node is computed as follows:

$$NC(s_i^{j,k}) = OT(s_i^{j,k})c_{sp(s_i^{j,k})}^{com} \qquad (7)$$

during execution of the program fragment $s_i^{j,k}$, a transmission overhead generated by interaction between the imported data and the database is computed as follows:

$$TC(s_i^{j,k}) = IT(s_i^{j,k})c_{sp(s_i^{x,y}),sp(s_i^{j,k})}^{tran} + \sum\nolimits_{h=1}^{l} DT(s_i^{j,k}, d_i^h)c_{dp(d_i^h),sp(s_i^{j,k})}^{tran} \qquad (8)$$

the money overhead $MC(s_i^j)$ generated by invoking the service $s_i^j$ once is the sum of the using overheads and the transmission overheads of all the program fragments included by the service, computed as follows:

$$MC(s_i^j) = \sum\nolimits_{k=1}^{f} (NC(s_i^{j,k}) + TC(s_i^{j,k})) \qquad (9)$$

the money overhead $MC(a_i)$ by executing the application $a_i$ once is the sum of products between the money overheads of all services and the number of times when the services are invoked, computed as follows:

$$MC(a_i) = \sum\nolimits_{j=1}^{o} MC(s_i^j)s_i^j.Time \qquad (10)$$

an optimization object of the unloading solution generating algorithm is to obtain an unloading solution for services and databases to minimize the total money overhead under the condition that the response time of each application satisfies the time constraint within the time period $\theta$; and finally, a formalized definition of the application unloading problem is as follows:

$$\begin{cases} MC_{total} = \min \sum\nolimits_{i=1}^{g} MC(a_i)\xi_i \\ \overset{\lambda_i}{RT}(a_i) \le dl_i \qquad \forall i = 1,...,g \quad \forall \lambda_i = 1,...,\xi_i \end{cases} \qquad (11).$$

7. The method for supporting adaptive unloading of multi-Internet of Things (IoT) applications in the edge environment according to claim 6, **characterized in that** a specific implementation method for the unloading solution generating algorithm based on the multi-task particle swarm optimization-genetic algorithm is as follows:
a coding strategy of the unloading solution generating algorithm satisfies the following three principles:

integrity: each candidate solution in a problem space can be encoded into a corresponding coding particle;
non-redundancy: each candidate solution in the problem space only corresponds to one coding particle; and
viability: each coding particle in a code space can correspond to the candidate solution in the problem space;
the coding strategy uses the particle $Z$ to represent a candidate solution for cost driven unloading of all services and databases in the MEC environment, wherein the ith particle in the tth iteration is described as (12):

$$\boldsymbol{Z}_i^t = (z_{i,1}^t, z_{i,2}^t, ...., z_{i,p}^t, z_{i,p+1}^t, ...., z_{i,p+q}^t) \qquad (12)$$

$$z_{i,k}^t = (n_j)_{i,k}^t \qquad (13)$$

where p and q respectively represent total quantities of the services and databases in the whole system; in the equation (13), $z_{i,k}^t (k = 1, 2, ..., p)$ represents the $i^{th}$ particle for the $t^{th}$ iteration of the $k^{th}$ service deployed by the computing node $n_j$, and $z_{i,k}^t (k = p+1, p+2, ..., p+q)$ represents the ith particle for the $t^{th}$ iteration of the (k-q)$^{th}$ database deployed by the computing node $n_j$;
each code bit of the particle represents the deployment address of the corresponding service or database, satisfying a completeness principle; different coding particles respectively represent different unloading solutions, and a certain feasible solution in the problem space only corresponds to one coding particle in the code space, satisfying a non-redundancy principle; however, some candidate solutions corresponding to the particle may not satisfy an expiration date constraint, so that the response times of some applications exceed a time limit, thereby, not satisfying a survival principle; all particles are divided into two categories:
feasible particles: in an unloading strategy corresponding to the particles, each application satisfies the expiration date constraint; and
infeasible particles: in the unloading strategy corresponding to the particles, execution of at least a certain application cannot satisfy the expiration date constraint;
to compare different particles, a fitness function is adopted to measure; the particles with small fitness represent better candidate solutions; because some solutions may make the response times of the applications exceed a stipulated expiration date, the particles are compared in the following three circumstances:

circumstance 1: one particle is the feasible solution while the other is the infeasible solution; and in this case, the feasible solution is selected, with the fitness function thereof being defined as follows:

$$F(Z_i^t) = \begin{cases} 0, & if\ \forall j\ \forall \lambda_j,\ \overset{\lambda_j}{RT}(a_j)_{Z_i^t} \leq dl_j \\ 1, & else \end{cases} \tag{14}$$

circumstance 2: the two particles both are the infeasible solutions; the particle with a smaller sum with a deadline difference because the particle is closer to the feasible solution and may be turned into the feasible solution in subsequent evolution, with the fitness function thereof being defined as follows:

$$F(Z_i^t) = \sum_{j=1}^{g} \sum_{\lambda_j=1}^{\xi_j} \left( \overset{\lambda_j}{RT}(a_j)_{(Z_i^t)} - dl_j \right) \tag{15}$$

circumstance 3: the two particles both are the feasible solutions; the particle with lower money overhead is selected, with the fitness function thereof being defined as follows:

$$F(Z_i^t) = MC_{total(Z_i^t)} \tag{16}$$

the particles are updated by introducing a crossover operator and a mutation operator of the genetic algorithm; an iterative update of the $i^{th}$ particle in the $(t+1)^{th}$ iteration is shown in the equation (17):

$$Z_i^{t+1} = F_g(F_p(F_u(Z_i^t, \varepsilon, \phi_u), pBest_i^t, \sigma_p, \phi_p), gBest^t, \sigma_g, \phi_g) \tag{17}$$

where $F_u()$ represents mutation operation, $F_g()$ and $F_p()$ represent crossover operations, $\varepsilon$ is an inertia weight ; $\sigma_p$ and $\sigma_g$ are acceleration coefficients ; and $\phi_u$, $\phi_p$, and $\phi_g$ are random numbers in an interval [0,1]; for an inertial portion, a velocity of the particle is defined as:

$$X_i^{t+1} = F_u(Z_i^t, \varepsilon, \phi_u) = \begin{cases} M_u(Z_i^t) & \phi_u \leq \varepsilon \\ Z_i^t & else \end{cases} \tag{18}$$

where $M_u()$ represents a mutation operator, and $\varepsilon$ represents a threshold where a mutation happens; when the random number $\phi_u$ is less than $\varepsilon$, the mutation operation is executed; first, an address indi in the particle is selected randomly , and then a computing node is selected randomly to replace the computing node mapped onto the original indi;

individual recognition and social recognition equations in the particle update are as follows:

$$Y_i^{t+1} = F_p(X_i^{t+1}, pBest_i^t, \sigma_p, \phi_p) = \begin{cases} C_p(X_i^{t+1}, pBest_i^t) & \phi_p \leq \sigma_p \\ X_i^{t+1} & else \end{cases} \tag{19}$$

$$Z_i^{t+1} = F_g(Y_i^{t+1}, gBest^t, \sigma_g, \phi_g) = \begin{cases} C_p(Y_i^{t+1}, gBest^t) & \phi_g \leq \sigma_g \\ Y_i^{t+1} & else \end{cases} \tag{20}$$

where $C_p()$ represents the crossover operation, $pBest_i^t$ represents the optimal historical particle of the $i^{th}$ individual in the $t^{th}$ iteration, $gBest^t$ represents the optimal historical particle among all the particles in the $t^{th}$ iteration, and $\sigma_p(\sigma_g)$ represents a threshold of individual crossover; and when the random number

$\phi_p$ ($\phi_g$) is less than a threshold ($\sigma_p(\sigma_g)$), the crossover operation is executed;

for one particle, the execution time and the total money overhead of each application in the corresponding unloading solution are computed; the unloading solution generating algorithm maps the particle to an unloading result through an evaluation algorithm; the evaluation algorithm compute an execution start time and an execution finish time of each program fragment by simulating the actual executive process of the program fragment, so as to compute the response time and the total money overhead of each of the application in the scheduling solution; the method comprises the following specific steps:

setting a variable *curTime* first, representing a current time initialized as 0, wherein the unloading solutions for the input service and database are respectively *SP* and *DP*; using a symbol $\lambda_i$ to represent the number of times when the application is executed, with an initial value being 1; defining three attributes $\overset{\lambda_i}{AT}(s_i^{j,k})$, $\overset{\lambda_i}{FT}(s_i^{j,k})$, and $\overset{\lambda_i}{RET}(s_i^{j,k})$ for each program fragment $s_i^{j,k}$, respectively representing a task arrival time of the executed fragment, a time when the fragment is executed, and a residual execution time of the fragment, and being initialized as follows:

$$\begin{cases} \overset{\lambda_i}{AT}(s_i^{j,k}) = \begin{cases} 0, & if\ j = 1, k = 1, and\ \lambda_i = 1 \\ None, & else \end{cases} \\ \overset{\lambda_i}{FT}(s_i^{j,k}) = None \\ \overset{\lambda_i}{RET}(s_i^{j,k}) = OT(s_i^{j,k}) \end{cases} \qquad (21)$$

and then calculating the response time and the money overhead when each application is executed through the equations (6) and (10);

the unloading solution generating algorithm adopts an adaptively adjusted discrete adjustment method based on advantages and disadvantages of the current swarm particles to adjust the inertia weight $\varepsilon$, shown as follows:

$$\varepsilon = \varepsilon_{max} - (\varepsilon_{max} - \varepsilon_{min}) \cdot \exp(\frac{d(Z_i^{t-1})}{d(Z_i^{t-1}) - 1.01}) \qquad (22)$$

$$d(Z_i^{t-1}) = \frac{div(Z_i^{t-1}, gBest^{t-1})}{p+q} = \frac{\sum_{j=1}^{p+q}\tau_j}{p+q} \qquad (23)$$

where $d(Z_i^{t-1})$ represents a difference between the $i^{th}$ particle $Z_i^{t-1}$ iterated currently for the $(t-1)^{th}$ time and the globally optimal solution $gBest^{t-1}$ iterated for the $(t-1)^{th}$ time; $\tau_j$ is a statistical factor; when the value $\tau_j$ is 1, it represents that the computing nodes mapped by $Z_i^{t-1}$ and $gBest^{t-1}$ on the $j^{th}$ code are the same, and otherwise, the value is 0; therefore, a search capability of the algorithm can be adaptively adjusted according to the difference between the current particle and the globally optimal particle;

and two recognition factors $\sigma_p$ and $\sigma_g$ of the algorithm are set by adopting a linear increasing and decreasing strategy; $\sigma_p^{star}$ and $\sigma_g^{star}$ respectively represent iterated initial values of parameters $\sigma_p$ and $\sigma_g$, and $\sigma_p^{end}$ and $\sigma_g^{end}$ respectively represent iterated final values of parameters $\sigma_p$ and $\sigma_g$.

8. The method for supporting adaptive unloading of multi-Internet of Things (IoT) applications in the edge environment according to claim 7, **characterized in that** the step that the evaluation algorithm, by taking the unloading solution and the application flowcharts as the inputs, obtains the execution time of each application and the total money overhead of the system comprises the following specific steps:

S1: filling channels: adding each program fragment onto the computing node in sequence according to the unloading solution till there is no null channel on the computing node, where $n_j.empty$ is used to represent the residual channel number of the node $n_j$, with the initial value thereof being $\omega_j$; and the program fragments put into the channels need to satisfy the condition that the task to execute the program fragment has arrived the computing node at the current time, i.e., $AT(s_i^{j,k^{\lambda_i}}) < curTime$;

S2: searching for the minimum timeslice: first, traversing the program fragments being executed on each computing node to find out the shortest residual execution time $RET(s_i^{j,k^{\lambda_i}})$, and assigning the shortest residual execution time to a timeslice *slice*; and then adding the current time *curTime* with *slice* to represent a time with a duration of *slice*;

S3: computing a residual time of the program fragment: subtracting the timeslice *slice* from the residual time $RET(s_i^{j,k^{\lambda_i}})$ of the program fragment being executed to represent an execution time of *slice*; when the residual time $RET(s_i^{j,k^{\lambda_i}})$ is 0, it represents that the program fragment has been executed completely, and a finish time $FT(s_i^{j,k^{\lambda_i}})$ is set to be *curTime*; then removing the fragment from the channel, and adding 1 into an idle channel number $n_j.empty$ of the node; if it is not the last fragment, taking out the next program fragment $s_i^{x,y}$ to be executed from $P_i$, wherein a time $AT(s_i^{x,y^{\lambda_i}})$ of task arrival is the sum of *curTime* and a data importing time $IT(s_i^{x,y})$; if the program fragment is the last fragment $P_i$, and the current execution times are smaller than the total execution times, it indicates that the application is executed completely to enter a next execution; and $AT(s_i^{1,1^{\lambda_i}})$ of the first program fragment executed next time is the maximum value of an ideal triggering time and the current time; and

repeating the above steps until each application $a_i$ has been executed for $\xi_i$ times, and finally, calculating the response time $RT(a_i^{\lambda_i})$ and the money overhead $MC(a_i)$ of each application executed through the equations (6) and (10).

9. The method for supporting adaptive unloading of multi-Internet of Things (IoT) applications in the edge environment according to claim 7, **characterized in that** an implementation flow of the MPSO-GA comprises the following steps:

S1: initializing related parameters of the MPSO-GA, including an initial swarm size $\delta$, a maximum iteration number of times *iters*$_{max}$, a maximum inertia weight $\varepsilon_{max}$, a minimum inertia weight $\varepsilon_{min}$, an initial value and a finish value $\sigma_p^{star}$ $\sigma_g^{star}$ $\sigma_p^{end}$ and $\sigma_g^{end}$ of the acceleration coefficient; and then randomly generating an initial total;

S2: calculating fitness of each particle according to equations (14)-(16); and selecting the optimal solution of each particle itself, and selecting the particle with the optimal fitness as the globally optimal solution in the current generation;

S3: updating each particle according to the equation (13), and re-calculating the fitness of each particle;

S4: updating the optimal individual particle of each particle; and if there is a solution better than an original particle, updating the globally optimal particle; and

S5: if an iteration stopping condition is satisfied, finishing the algorithm; and otherwise, returning to S3 for continuous iteration.

FIG. 1

FIG. 2

```
void service_a(Parameter_a, seq):          void service_b(Parameter_b, seq):
    seq+=service_a                             seq+=service_b
    ........                                   ........
    connect = call(seq, database)             Parameter_a={'parameterkqey_{i,1}':parameter_{i,1}, ..., 'parameterkey_{i,m}':
    ........                                   parameter_{i,m}}
    return result_a                           result_a=Invoke(service_a,Parameter_a,seq)
                                               ........
                                               connect = call(database)
                                               ........
                                               return result_b

    (a) pure service                          (b) compound service
```

FIG. 3

Void Service$_1^1$(Params$_1^1$, Seq):

    .........

    Channel = Call(DatabaseName$_1^1$)

    .........

    Result$_1^2$ = Invoke(ServiceName$_1^2$,Params$_1^2$,Seq)

    .........

    Result$_1^4$ = Invoke(ServiceName$_1^4$,Params$_1^4$,Seq)

    .........

    return Result$_1^3$

Void Service$_1^2$(Params$_1^2$, Seq):

    Result$_1^3$= Invoke(ServiceName$_1^3$,Params$_1^3$,seq)

    .........

    return Result$_1^2$

Void Service$_1^3$(Params$^{13}$, Seq):

    .........

    return Result$_1^2$

Void Service$_1^4$(Params$_1^4$, Seq):

    .........

    return Result$_1^4$

(a) application          (b) program fragment flowchart

FIG. 4

FIG. 5

FIG. 6

FIG. 7

```
                              ┌─────────────────┐
                              │      Start      │
                              └────────┬────────┘
                                       │
                              ┌────────▼──────────────┐
                              │ Initialize related    │
                              │     parameters        │
                              └────────┬──────────────┘
                                       │
                              ┌────────▼──────────────┐
                              │ Generate a primary    │
                              │       swarm           │
                              └────────┬──────────────┘
                                       │
                   ┌───────────────────▼────────────────────┐
                   │ Compute the fitness of each particle,   │
                   │ and select the individual optimal       │
                   │ particle pBestᵢᵗ and the global         │
                   │ optimal particle gBestᵗ                 │
                   └───────────────────┬────────────────────┘
                                       │
                   ┌───────────────────▼────────────────────┐
                   │ Update the particle through a particle  │
                   │          update strategy                │
                   └───────────────────┬────────────────────┘
                                       │
                   ┌───────────────────▼────────────────────┐
                   │ Re-compute the fitness of each updated  │
                   │            particle                     │
                   └───────────────────┬────────────────────┘
                                       │
                   ┌───────────────────▼────────────────────┐
                   │ Update the individual optimal particle  │
                   │ pBestᵢᵗ and the global optimal          │
                   │ particle gBestᵗ                         │
                   └───────────────────┬────────────────────┘
```

Compute the fitness of each particle, and select the individual optimal particle $pBest_i^t$ and the global optimal particle $gBest^t$

Update the particle through a particle update strategy

Re-compute the fitness of each updated particle

Update the individual optimal particle $pBest_i^t$ and the global optimal particle $gBest^t$

No — Whether a finish condition is satisfied — Yes

Finish

FIG. 8

FIG. 9

FIG. 10

FIG. 11

EP 4 404 540 A1

(a) LPRA

(b) TDA

(c) FRA

FIG. 12

FIG. 13

## INTERNATIONAL SEARCH REPORT

International application No.

**PCT/CN2023/097420**

### A. CLASSIFICATION OF SUBJECT MATTER

H04L67/63(2022.01)i; G06F8/61(2018.01)i; G06F9/445(2018.01)i; H04L67/10(2022.01)i

According to International Patent Classification (IPC) or to both national classification and IPC

### B. FIELDS SEARCHED

Minimum documentation searched (classification system followed by classification symbols)

IPC: H04L,G06F

Documentation searched other than minimum documentation to the extent that such documents are included in the fields searched

Electronic data base consulted during the international search (name of data base and, where practicable, search terms used)

CNTXT; ENTXTC; VEN; DWPI; CJFD; WPABS: 边缘, 计算卸载, 多物联网, 密集, 移动云计算, 算法, 遗传算法, 多任务, 粒子群, 单独部署, 方案, 策略, 计算节点, 开销, 粒度, edge, calculation unloading, offload, multi-internet of things, granularity, dense, mobile cloud computing, MCC, algorithm, genetic aigorithm, multi-tasking, particle population, individually depliyed, scheme, computing node?, overhead

### C. DOCUMENTS CONSIDERED TO BE RELEVANT

| Category* | Citation of document, with indication, where appropriate, of the relevant passages | Relevant to claim No. |
|---|---|---|
| PX | CN 115733888 A (FUZHOU UNIVERSITY) 03 March 2023 (2023-03-03) claims 1-9 | 1-8 |
| A | CN 112380008 A (TIANJIN UNIVERSITY OF TECHNOLOGY) 19 February 2021 (2021-02-19) entire document | 1-8 |
| A | CN 115129387 A (TONG XING TECHNOLOGY CO., LTD.; SHANTOU UNIVERSITY) 30 September 2022 (2022-09-30) entire document | 1-8 |
| A | CN 113672295 A (GUILIN UNIVERSITY OF TECHNOLOGY) 19 November 2021 (2021-11-19) entire document | 1-8 |
| A | WO 2022121097 A1 (NANJING UNIVERSITY OF POSTS AND TELECOMMUNICATIONS) 16 June 2022 (2022-06-16) entire document | 1-8 |

☑ Further documents are listed in the continuation of Box C.　　☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **21 September 2023** | **22 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
|---|---|
| | **PCT/CN2023/097420** |

**C.     DOCUMENTS CONSIDERED TO BE RELEVANT**

| Category* | Citation of document, with indication, where appropriate, of the relevant passages | Relevant to claim No. |
|---|---|---|
| A | 齐平; 王福成; 徐佳; 李学俊 (QI, Ping; WANG, Fucheng; XU, Jia; LI, Xuejun). "移动边缘计算环境下基于信任模型的可靠多重计算卸载策略 (Trust Based Multi-resource Computation Offloading Strategy in Mobile Edge Computing Environment)" 计算机集成制造系统 (*Computer Integrated Manufacturing Systems*), No. 06, 15 June 2020 (2020-06-15), entire document | 1-8 |
| A | 王登辉; 陈毅红 (WANG, Denghui; CHEN, Yihong). "面向物联网的移动边缘计算任务卸载方法研究 (Research on Task Off Loading Method of MEC in Internet of Things)" 内江师范学院学报 (*Journal of Neijiang Normal University*), No. 10, 25 October 2020 (2020-10-25), entire document | 1-8 |

Form PCT/ISA/210 (second sheet) (July 2022)

<table>
<tr><th colspan="2">INTERNATIONAL SEARCH REPORT<br>Information on patent family members</th><th colspan="2">International application No.<br>**PCT/CN2023/097420**</th></tr>
<tr><th>Patent document<br>cited in search report</th><th>Publication date<br>(day/month/year)</th><th>Patent family member(s)</th><th>Publication date<br>(day/month/year)</th></tr>
<tr><td>CN 115733888 A</td><td>03 March 2023</td><td>None</td><td></td></tr>
<tr><td>CN 112380008 A</td><td>19 February 2021</td><td>None</td><td></td></tr>
<tr><td>CN 115129387 A</td><td>30 September 2022</td><td>None</td><td></td></tr>
<tr><td>CN 113672295 A</td><td>19 November 2021</td><td>None</td><td></td></tr>
<tr><td>WO 2022121097 A1</td><td>16 June 2022</td><td>CN 112492626 A</td><td>12 March 2021</td></tr>
</table>

Form PCT/ISA/210 (patent family annex) (July 2022)